# EUROPEAN PATENT APPLICATION

(11) **EP 1 293 921 A1**
(43) Date of publication of application: **19.03.2003**
(21) Application number: 02020462.4
(22) Date of filing: 12.09.2002
(51) Int. Cl.: G06F 17/60

(54) **Qualification information management method and apparatus**

(30) Priority: 17.09.2001 JP 2001280909; 18.03.2002 JP 2002073484
(71) Applicant: Hitachi, Ltd., Chiyoda-ku, Tokyo 101-8010 (JP)
(72) Inventor: Matsushima, Hideo, Hitachi, Ltd., Int. Prop. Gr., Chiyoda-ku, Tokyo 100-8220 (JP); Kaneto, Kunikazu, Hitachi, Ltd., Int. Prop. Gr., Chiyoda-ku, Tokyo 100-8220 (JP); Oguri, Tadakazu, Hitachi, Ltd., Int. Prop. Gr., Chiyoda-ku, Tokyo 100-8220 (JP); Imura, Toshiya, Hitachi, Ltd., Int. Prop. Gr., Chiyoda-ku, Tokyo 100-8220 (JP)
(74) Representative: Beetz & Partner Patentanwälte

(57) **Abstract**

The invention relates to a first method including the steps of: receiving from a user registered in advance the retrieval condition of qualification relevant information relating to the facilities management of a corporation to which the user belongs; obtaining the qualification relevant information corresponding to the retrieval condition from at least one of statute information and qualification information relating to the facilities management of the corporation, qualification information about a staff of the corporation, and information relating to a facilities manager of the corporation; and displaying the qualification relevant information corresponding to the retrieval condition on the terminal screen of the user.

## Description

### FIELD OF THE INVENTION

The present invention relates to the management of the facilities relating to the qualifications such as the qualifications and seminars regulated by statutes and required in the operation management of a corporation (hereinafter referred to as qualifications, etc.), the qualifications, etc. individually regulated by a corporation for its operation management, the qualifications regulated by various organizations, institutes, corporations, etc., and to the management of the development of human resources required for operation management.

### DESCRIPTION OF THE RELATED ART

Conventionally, the management of qualifications in a corporation, etc. (hereinafter simply referred to as qualification management) has been performed as the management of information pertaining to each person, and has not been associated with the reference statutes, facilities, etc. On the other hand, statutes are reformed, regulated, and done away on a day-to-day basis. However, no new statutes reflecting the new information are issued within a few months. To maintain the up-to-date information relating to statutes, each corporation only has to refer to official gazettes.

Furthermore, facilities are divided into two groups, that is, those that have a legal obligation to be managed by a specified staff reported to the government and municipal officials, and those that have not legal obligation, but are managed by a manager specified by each corporation. A corporation has to manage these two types of facilities. A specified staff can be selected from among qualified staffs specified by law. A manager specified by a corporation has to be selected from among qualified staffs in each corporation. Hereafter, in this specification, a specified staff who is to be reported by law and a manager individually specified by a corporation are commonly referred to as a facility manager.

However, since qualifications and facilities have not conventionally been managed in conjunction, a facilities manager cannot be easily changed. Furthermore, the conventional management of qualifications, etc. is performed for each staff so far, and there have been no analysis functions such as the age distribution, the prediction of the number of qualified staffs, etc.

There is a conventional technology 'EcoAssist' described in 'High-tack' 2001-2, page 7-8 (February 1, 2001 issued by Hitachi, Ltd.). EcoAssist is a system for use by a corporation obtaining the authentication of ISO14001, which is the international standard of an environment management system, and supporting the maintenance and operation. The above mentioned document describes EcoAssist as having the functions of surveying related statutes, managing documents for support of generation and update of various documents such as environment manuals, internal audit documents, etc., making a seminar record for management of seminar records made in various divisions and departments, etc.

However, the above mentioned EcoAssist has no cooperative functions between facilities management and qualification management, and no analysis functions such as the age distribution of qualified staffs, the prediction of the number of qualified staffs, etc. That is, no conventional technology satisfactorily work for qualification information management including the above mentioned cooperative functions and analysis functions.

### SUMMARY OF THE INVENTION

A first object of the present invention is to provide a method and an apparatus for managing qualification information capable of easily and quickly changing a facilities manager in a corporation.

A second object of the present invention is to provide a method and an apparatus for managing qualification information capable of correctly planning the development of facilities managers and human resources required in operation management of a corporation.

To attain the first and second objects of the present invention, the first method according to the present invention includes the steps of: receiving through a network from a user registered in advance the retrieval condition of qualification relevant information concerning to the facilities management of a corporation to which the user belongs; obtaining the qualification relevant information corresponding to the retrieval condition from at least one of statute information and qualification information concerning to the facilities management of the corporation, qualification information about a staff of the corporation, and/or information about a facilities manager of the corporation; and/or displaying the qualification relevant information corresponding to the retrieval condition on the terminal screen of the user.

To realize the first method, the first apparatus is connected to a system of a corporation which has made a management contract through a network for managing qualification relevant information concerning to the facilities management of the corporation, and includes: a statute information management unit for managing the statute information relating to the facilities management of the corporation; an access right management unit for inputting the user information input from the user terminal of the corporation through the network, and/or managing an access right of a user corresponding to the user information; and/or an application program management unit for transmitting to the system of the corporation a program for inputting through the network a retrieval condition of the qualification relevant information input from the user terminal, extracting the statute information corresponding to the retrieval condition from the statute information management unit, extracting qualification relevant information corresponding to the extracted statute information from the system of the corporation, and/or displaying the extracted information on the user terminal.

To realize the first method, the second apparatus according to the present invention is a qualification information management apparatus, connected to a system of a corporation which has made a management contract through a network, for managing qualification relevant information concerning to the facilities management of the corporation, including: a statute informationmanagement unit for managing the statute information relating to the facilities management of the corporation; a facilities information management unit for managing the facilities information about the corporation; a personal information management unit for managing qualification information about a staff of the corporation; an access right management unit for inputting user information input from a user terminal of the corporation through the network, and managing an access right of a user corresponding to the user information; and/or an application program management unit for inputting through a network a retrieval condition of the qualification relevant information input from the user terminal, extracting the qualification relevant information corresponding to the retrieval condition from the facilities information management unit and the personal information management unit, and/or transmitting the extracted qualification relevant information to the user terminal through the network.

According to the above mentioned first and second apparatuses, the user can easily and quickly change a facilities manager in a corporation according to the displayed terminal screen by using the information at least relating to a new probable facilities manager as qualification relevant information displayed on (transmitted to) the user terminal screen. In addition, as qualification relevant information displayed on (transmitted to) the user terminal screen, according to the information relating to at least one of the age distribution of qualified staffs in a corporation and the predicted change over time in number of qualified staffs, the user can reserve and maintain a facilities manager as planned in a corporation according to the information displayed on the terminal screen.

Additionally, to attain the first object of the present invention, the second method according to the present invention includes the steps of: receiving through a network from a user registered in advance the retrieval condition of the qualification relevant information concerning to the facilities management of a corporation to which the user belongs; extracting the qualification relevant information corresponding to the retrieval condition from at least one of statute information and qualification information concerning to the facilities management of the corporation, qualification information about a staff of the corporation, and/or information about a facilities manager of the corporation; and/or displaying at least the information relating to a new probable facilities manager on the terminal screen of the user.

According to the second method, the user can easily and quickly change a facilities manager in a corporation according to the information displayed on the terminal screen.

In addition, to attain the first object of the present invention, the third method according to the present invention includes the steps of: receiving through the network from a user registered in advance the retrieval condition of the qualification relevant information concerning to the facilities management of a corporation to which the user belongs; extracting the qualification relevant information corresponding to the retrieval condition from at least one of statute information and qualification information concerning to the facilities management of the corporation, qualification information about a staff of the corporation, and/or information about a facilities manager of the corporation; and/or displaying the information relating to at least one of the age distribution of qualified staffs in the corporation and a predicted change over time in number of qualified staffs on the terminal screen of the user.

According to the third method, the user can reserve and maintain as planned a facilities manager in a corporation according to the information displayed on the terminal screen.

Furthermore, to attain the second object of the present invention, the fourth method according to the present invention includes the steps of: receiving through a network from a user registered in advance the retrieval condition of qualification relevant information concerning to the operation management of a corporation to which the user belongs; obtaining the qualification relevant information corresponding to the retrieval condition from at least one of statute information and qualification information concerning to the operation management of the corporation, and qualification information about a staff of the corporation; and/or displaying the qualification relevant information corresponding to the retrieval condition on the terminal screen of the user.

To realize the fourth method of the present invention, the third apparatus according to the present invention is connected to a system of a corporation which has made a management contract through a network, manages qualification relevant information concerning to facilities management of the corporation, and includes: a statute information management unit for managing the statute information relating to the operation management of the corporation; an access right management unit for inputting the user information input from a user terminal of the corporation through the network, and/or managing an access right of a user corresponding to the user information; and an application program management unit for transmitting to the system of the corporation a program for inputting through a network a retrieval condition of the qualification relevant information input from the user terminal, extracting the statute information corresponding to the retrieval condition from the statute information management unit, extracting the qualification relevant information corresponding to the extracted statute information from the system of the corporation, and displaying the extracted information on the user terminal.

To realize the fourth method of the present invention, the fourth apparatus according to the present invention is connected to a system of a corporation which has made a management contract through a network for managing qualification relevant information concerning to operation management of the corporation, and includes: a statute information management unit for managing the statute information relating to the operation management of the corporation; a personal information management unit for managing the qualification information about a staff of the corporation; an access right management unit for inputting the user information input from a user terminal of the corporation through the network, and managing an access right of a user corresponding to the user information; and/or an application program management unit for inputting through a network a retrieval condition of the qualification relevant information input from the user terminal, extracting the qualification relevant information corresponding to the retrieval condition from the personal information management unit, and/or transmitting the extracted qualification relevant information to the user terminal through the network.

According to the above mentioned fourth method and the third and fourth apparatus, using the qualification relevant information displayed on (transmitted to) the user terminal screen which is the information relating to at least one of an age distribution of qualified staffs in the corporation and a predicted change over time in number of qualified staffs in the corporation, the user can reserve and maintain as planned the human resources required in the operation management in a corporation according to the information displayed on the terminal screen.

As described above, the present invention can successfully support the qualification information management of a corporation according to the qualification information required in the operation management of the corporation and the relevant statute information and facilities information in conjunction. That is, an ASP (application service provider) business for satisfactorily supporting the qualification information management of a corporation can be successfully realized.

### BRIEF DESCRIPTION OF THE DRAWINGS

FIG. 1 shows the outline of an information network relating to the service business according to the first embodiment;
FIG. 2 is a flowchart of the outline of the business relating to the service business according to the first embodiment;
FIG. 3 shows the outline of the configuration of the information system of the management company and the corporation shown in Figure 1;
FIG. 4 shows the detailed contents of the management service according to the first embodiment of the present invention;
FIG. 5 shows an example of a login screen to a management system;
FIG. 6 shows an example of a common menu screen;
FIG. 7 shows an example of a management menu screen;
FIG. 8 shows an example of an executive menu screen;
FIG. 9 shows an example of a screen of the menu 'qualification and base statute commentary';
FIG. 10 shows an example of the screen of the menu 'qualification and base statute commentary';
FIG. 11 shows an example of the screen of the menu 'qualification and base statute commentary';
FIG. 12 shows an example of the screen of the menu 'personal maintenance';
FIG. 13 shows an example of the screen of the menu 'specified staff retrieval';
FIG. 14 shows an example of the screen of the menu 'job experience history retrieval';
FIG. 15 shows an example of the screen of the menu 'update prospect retrieval';
FIG. 16 shows an example of the screen of the menu 'age distribution chart by age';
FIG. 17 shows an example of the display screen of simulation by qualification;
FIG. 18 shows an example of the display screen of simulation by qualification;
FIG. 19 shows an example of the screen of the menu 'specified staff maintenance';
FIG. 20 shows an example of the screen of the menu 'specified staff maintenance';
FIG. 21 shows an example of the screen of the menu 'specified staff maintenance';
FIG. 22 shows the outline of the information system of the management company and the corporation according to the second embodiment;
FIG. 23 shows the detailed contents of the management service according to the second embodiment;
FIG. 24 shows the detailed contents of the management service according to the third embodiment;
FIG. 25 shows the outline of the information system of the management company and the corporation according to the fourth embodiment;
FIG. 26 shows the outline of the information system of the management company and the corporation according to the sixth embodiment;
FIG. 27 shows one example of the common menu screen;
FIG. 28 shows one example of the management menu screen;
FIG. 29 shows one example of the executive menu screen;
FIG. 30 shows one example of the 'personal maintenance' menu screen;
FIG. 31 shows one example of the 'age distribution chart by qualification' menu screen;
FIG. 32 shows one example of the 'personal task skill trace' menu screen;
FIG. 33 shows one example of the 'personal task skill trace' menu screen;
FIG. 34 shows one example of the 'qualified staff trace per task' menu screen;
FIG. 35 shows one example of the 'qualified staff trace per task' menu screen;
FIG. 36 shows one example of the 'individual task skill trace' menu screen; and
FIG. 37 shows one example of the 'individual task skill trace' menu screen.

### DETAILED DESCRIPTION OF THE PREFERRED EMBODIMENT

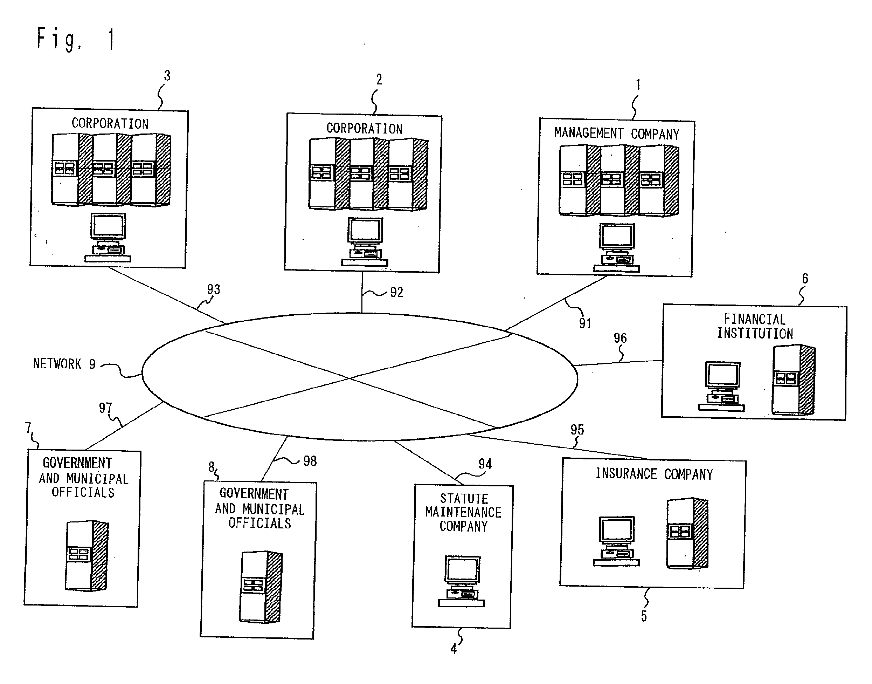

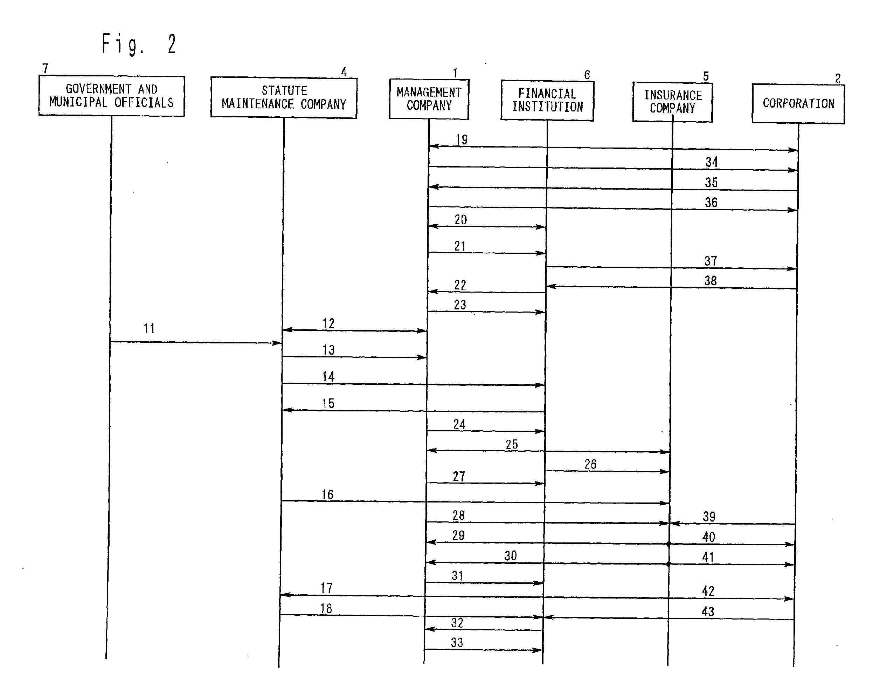

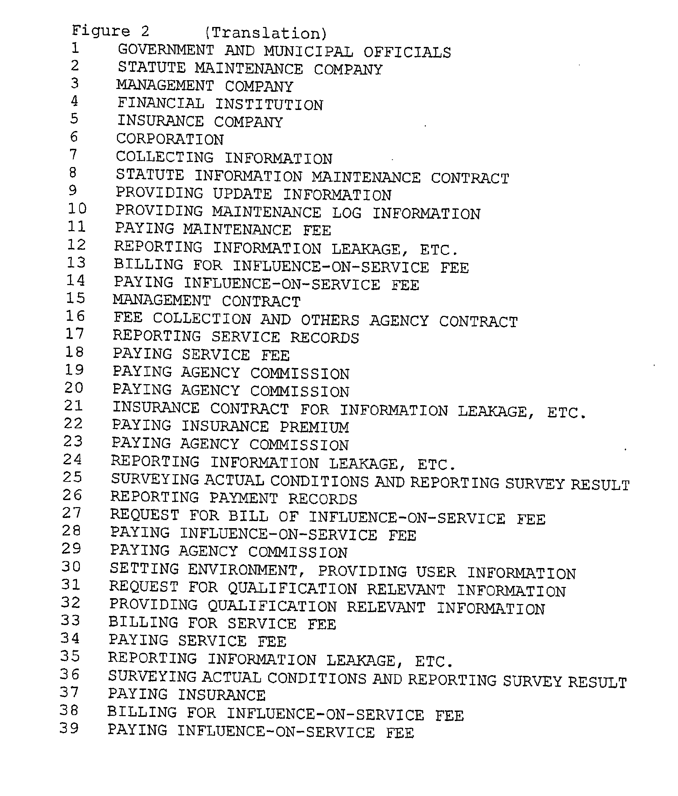

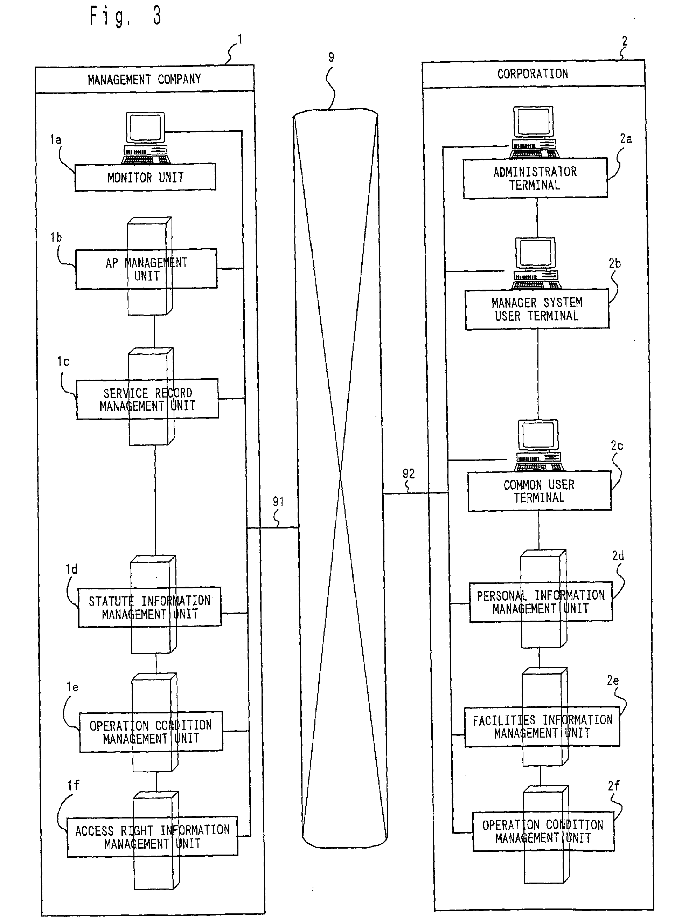

The first embodiment applied to a qualification information management service business for a corporation is described below by referring to the attached drawings. Figure 1 shows the outline of an information network relating to the service business according to the first embodiment. Figure 2 is a flowchart of the outline of the business relating to the service business according to the first embodiment. Figure 3 shows the outline of the configuration of the information system of the management company and the corporation shown in Figure 1.

As shown in Figure 1, those involved in this service business are a management company 1, corporations 2 and 3, a statute maintenance company 4, an insurance company 5, a financial institution 6, government and municipal officials 7 and 8, etc. Among them, information is transmitted and received through information transmission lines (information communications lines) 91, 92, 93, 94, 95, 96, 97, and98 connected to a network 9.

The management company 1 performs a service business as an ASP according to the present invention. The corporations 2 and 3 are companies or organizations (hereinafter referred to as a company, etc.) using the service as a client. The statute maintenance company 4 collects information about statutes, regulations, official gazettes, examinations, qualifications, seminars (hereinafter referred to as statutes, etc.), and updates the information, etc.

The insurance company 5 compensates (insures) for the loss upon the management company 1, the corporation 2 or 3, the statute maintenance company 4 and the like caused by an accident, etc. The financial institution 6 can be a bank, a credit card company, a loan company, etc. The government and municipal officials 7 and 8 are a nation and local governments. According to the present invention, the examination organizations, groups, societies, corporations, etc. specified by the government and municipal officials are also referred to as the government and municipal officials.

As shown in Figure 3, the information system of the management company 1 comprises a monitor unit 1a, an AP management unit 1b, a service record management unit 1c, a statute information management unit 1d, an operation condition management unit 1e, an access right information management unit 1f, etc.

The monitor unit 1a has the function of monitoring the system according to the present invention in the management company 1, and comprises a monitor terminal (information terminal), and a computer (not shown in the attached drawings) connected to the terminal. The AP management unit 1b manages an application program (AP) . The service record management unit 1c manages the records of the services by the system according to the present invention. This service record includes, for example, the use state of services, a communications record, etc.

The statute information management unit 1d manages the information about the statute such as the contents of a statute, the interpretation of a statute, etc. The operation condition management unit 1e manages the operation condition, etc. of the management company 1 for services. The access right information management unit 1f manages the information about access rights and user rights of users of the corporations 2 and 3. The information managed by each management unit 1b - 1f in the information system of the management company 1 can be managed by a single database.

The management units 1b to 1f of the information system of the management company 1 have computers that perform respective functions, either actually or virtually. The monitor terminal and the computer of the monitor unit 1a, and the computers of the management units 1b to 1f are connected to the network 9 through the information transmission line 91. The information system with the above mentioned configuration functions as the management system (management apparatus) of the management company 1.

As shown in Figure 3, the information system of the corporation 2 comprises an administrator terminal 2a, a manager system user terminal 2b, a common user terminal 2c, a personal information management unit 2d, a facilities information management unit 2e, an operation condition management unit 2f. The corporation 3 comprises a similar information system.

The administrator terminal 2a is an information terminal accessible by a staff or an organization (administrator) having the right and the responsibility to manage the qualification information managing operation in a corporation. The manager system user terminal 2b is an information terminal accessible by a staff (manager) having the right and the responsibility to manage the corporation. The common user terminal 2c is an information terminal accessible by a staff having no management right in the corporation. The function of these terminals 2a - 2c does not depend on the computer itself, but is determined by the access authority of the user set in the access right information management unit 1f and the personal information management unit 2d.

The personal information management unit 2dmanages basic personal information and the personal information relating to qualifications, etc. The basic personal information can be a division to which a staff belongs, a title, a type of job, a birth day, a name, a name code, etc. A name code refers to a code assigned to all staffs in a corporation for identification (designation) of each staff. The personal information relating to qualifications, etc. can include information related to the allowed qualification, the mastered seminar, the qualification issue date, the issue number, the expected update time, etc.

The facilities information management unit 2e manages the information relating to facilities. The information relating to facilities can be a facility installation place, a facility name, a facility type, a facilities manager, etc. The operation condition management unit 2f manages the operation/management condition of a corporation for reception of a management service from the management company 1. The information to be managed by each management unit 2d - 2f for the information system of a corporation can be managedby a single database.

Each of the management units 2d to 2f for the information system of a corporation has a computer for performing each function, either actually or virtually. The terminals 2a to 2c and the computers of the management units 2d to 2f are connected to the network 9 through the information transmission line 92. With the configuration, the system functions as an information system of the corporation for reception of management services from the management company 1.

The details of the service business according to the present invention is described below by referring to Figure 2. To allow a user in a corporation to receive the management service according to the present invention, the management company 1 makes a management contract with the corporation. The management contract is made with a plurality of corporations, but Figure 2 only shows the corporation 2.

In the management contract, a billing condition (payment condition) depending on the number of common users, manager system users, and administrators in the corporation 2, a billing condition depending on the number of facilities of the corporation-side information system, a billing condition depending on the access frequency, a billing condition depending on the number of data entries, etc. can be decided. The fee can be paid on a fixed-price basis, a usage basis, a fixed-price and usage basis, etc. The payment on a usage basis is made by determining a service rate depending on, for example, the amount (frequency) of retrieval performed in a predetermined period.

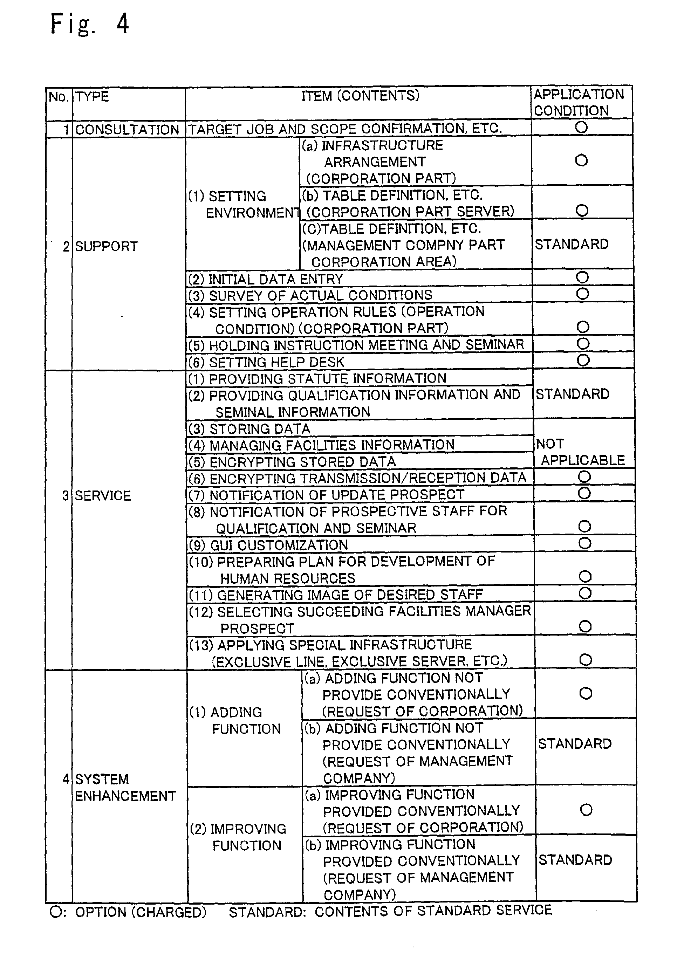

The billing condition depending on each item (contents) of the management service according to the present invention shown in Figure 4 can also be determined by the management contract.

Figure 4 shows the detailed contents of the management service according to an embodiment of the present invention. As shown in Figure 4, the management service provided by the management company 1 is divided into four sections, that is, consultation, support, service, and system enhancement.

In the consultation section, the management company 1 extracts the problems in the corporation 2, confirms (defines) the target operations (applications) and the scope of the service, and selects the functions required for the service, etc. in cooperation with the corporation 2. The management company 1 provides the information relating to a staff in charge of the inquiries until the start of the system operation (for example, a telephone number, a FAX number, a mail address, etc.) for the corporation 2.

In the support section, the management company 1 sets an environment, enters initial data, surveys the actual conditions, determines the operation rules (operation conditions), holds an instruction meeting and a seminar, set a help desk, etc.

Setting an environment includes three items, that is, arranging the infrastructure of a corporation, defining a corporation-side table, and defining a management-company-side table. When the infrastructure of the corporation is arranged, the management company 1 supports the design and the introduction of the arrangement of the corporation-side infrastructure. In defining a corporation-side table, the management company 1 sets the corporation-side table in the personal information management unit 2d, the facilities information management unit 2e, and the operation condition management unit 2f of the corporation 2 as an agent and supporter. A corporation-side table is a data table required for the information system of the corporation 2 to manage qualifications. In defining the management-company-side table, the management company 1 sets a data table required in managing qualifications of the corporation 2 in the operation condition management unit 1e and the access right information management unit 1f of the management company. The contents of the management-company-side table are set depending on the contents of the corporation-side table.

In entering initial data, the personal information about the corporation 2 is entered in the personal information management unit 2d, the information about the facilities of the corporation 2 is entered in the facilities information management unit 2e, and the information about the operation condition and the management condition of the corporation is entered in the operation condition management unit 2f. The management company 1 enters the information as an agent and supporter.

In the survey of actual conditions, the management company 1 executes as an agent and supports the survey of the personal information and the facilities information about the corporation 2. In regulating the operation rules (operation conditions), the management company 1 executes as an agent and supports the regulation of the operation rules (operation conditions) relating to the qualification management of the corporation 2. In holding an instruction meeting and a seminar, the management company 1 holds an instruction meeting and a seminar about qualification management for the common users, manager system users, and administrators of the corporation 2. In setting a help desk, the management company 1 sets an inquiry staff after the practical operation of the system, and provides the corporation 2 with the information relating to the inquiry staff.

In the service section, the management company 1 provides statute information, provides qualification information and seminar information (hereinafter referred to as qualification information, etc.), encrypts transmission/reception data, gives a notification of a staff to be updated, gives a notification of a staff to be allowed a qualification and a seminar, customizes a GUI, sets a plan for human resources, generates an image of a desired staff, selects a prospective successor of the facilities manager, applies a special infrastructure, etc.

Since the corporation 2 manages personal information and facilities information according to an embodiment of the present invention, the management company 1 does not perform the three items of the service shown in Figure 4, that is, the storage of data, the management of facilities information, and the encryption of stored data.

In providing statute information, the management company 1 obtains from the statute maintenance corporation the information relating to statutes, etc. (hereinafter referred to as statute information) as described later, and provides the information for the corporation 2. In providing qualification information, the management company 1 provides the information relating to qualifications and the relevant information relating to seminars according to the request from a user in the corporation 2 as described later.

In encrypting transmission/reception data, the management company 1 encrypts confidential data, etc. of the corporation 2, and guarantees the security of the data transmitted and received (transmission/reception data) through the network 9. However, according to an embodiment of the present invention, the information about the corporation to be confidential such as the personal information, the facilities information about the corporation 2, etc. is not processed as transmission/reception data, but only the encrypted information is processed as transmission/reception data. Therefore, the encryption of transmission/reception data is not included in the contents of the standard service, but is performed as an optional service.

In giving a notification of a staff to be updated, the management company 1 notifies the manager system user of the corporation 2 of the information relating to a staff whose qualification is to be updated a predetermined period in advance of the expiration of the qualification according to the information stored (registered) in the operation condition management unit 1e and 2f and the personal information management unit 2d. In giving a notification of a staff to be allowed a qualification and a seminar, the management company 1 obtains a qualification to be acquired and a seminar to be taken for each type of job and title according to the information stored in the operation condition management units 1e and 2f and the personal in formation management unit 2d, and notifies the manager system user of the corporation 2 of the information for each person.

In customizing a GUI, the management company 1 customized a GUI (graphic user interface), etc. depending on the need of the corporation 2. In preparing a plan for the development of human resources, the management company 1 predicts human resources (qualified staffs, etc.) required in the future according to the information stored in the personal information management unit 2d, generates a plan for the development of human resources to supplement the human resources in need, and provides the information relating to plan for the development of human resources for the corporation 2.

In generating an image of a desired staff, the management company 1 obtains a staff (a qualified person, etc.) in need according to the information stored in the personal information management unit 2d, and provides the information relating to an image of a required staff for the corporation 2. In selecting a prospective successor of a facilities manager, the management company 1 selects a prospective successor of a facilities manager according to the information stored in the facilities information management unit 2e, the operation condition management units 1e and 2f, and the personal information management unit 2d, and provides the information relating to the prospective successor for the corporation 2.

In applying a special infrastructure, the management units 1b to 1f of the management company 1 and the information transmission line 91 are used as an exclusive server and an exclusive line of the corporation 2 respectively. As a service in applying a special infrastructure, the network 9 and the information transmission line 92 are connected as an exclusive line of the corporation 2.

In enhancing a system, the management company 1 adds and improves functions. When a function is added, a management function which has never been performed in the conventional technology is added. An additional function can be provided at a request of the corporation 2, or can be provided by the suggestion (or at a request) of the management company 1. When a function is improved, a conventional function is improved. A function can be improved at a request of the corporation 2, or can be improved by the suggestion (or at a request) of the management company 1.

The contents of a standard service provided by the management company 1 is displayed as 'standard' in the column of the application condition shown in Figure 4. The circle in the column of the application condition in Figure 4 indicates the contents of an optional service to be billed for an additional fee.

The practical method of managing qualification information according to an embodiment of the present invention is described below by referring to Figure 2. First, the management company 1 defines a corporation-side table and a management-company-side table as the settings of an environment, and notifies the corporation 2 of an access right (an administrator, a manager system user, and a common user) of each user, a user ID, and a password (providing user information). The user information (an access right, a user ID, and a password) is registered in the access right information management unit 1f when the initial data is registered.

Then, a user of the corporation 2 accesses the management system of the management company 1 using the terminals 2a to 2c, and requests qualification relevant information. In response to the request, the management system of the management company 1 provides qualification relevant information.

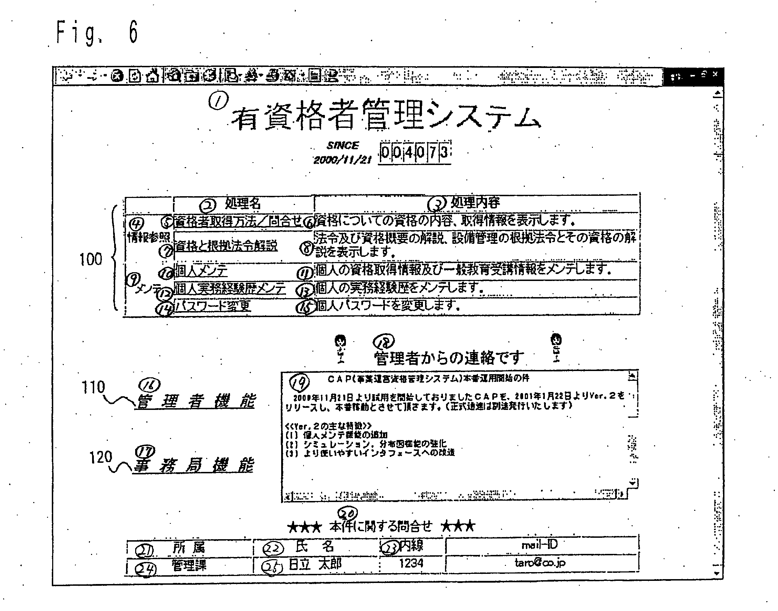

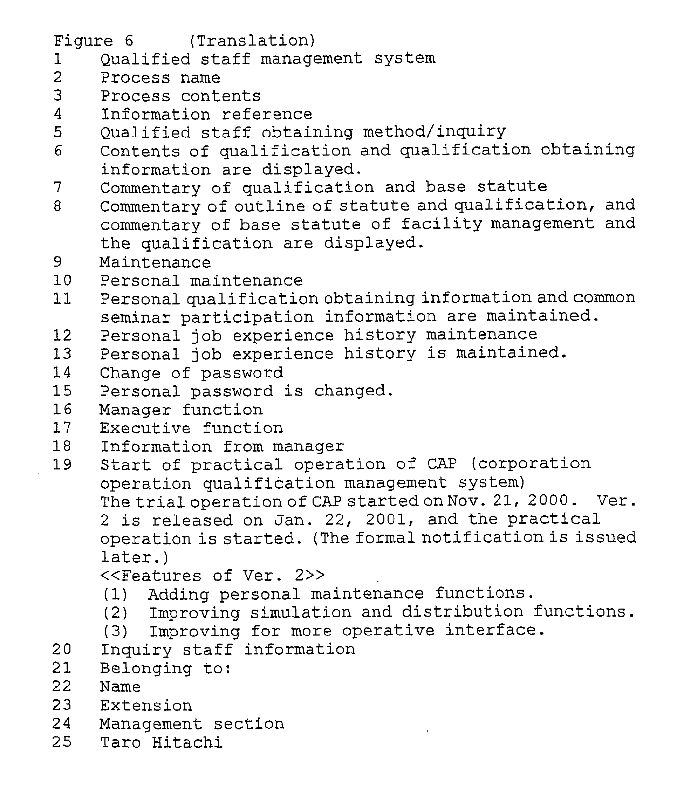

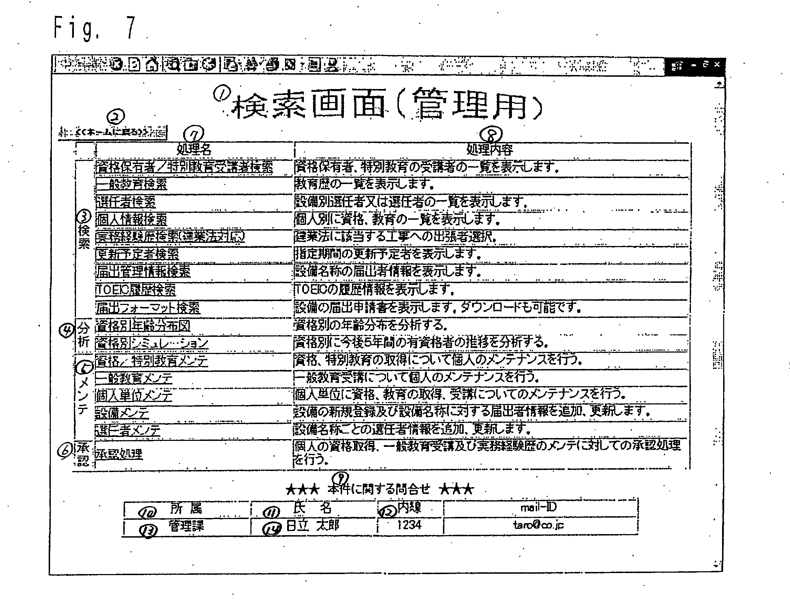

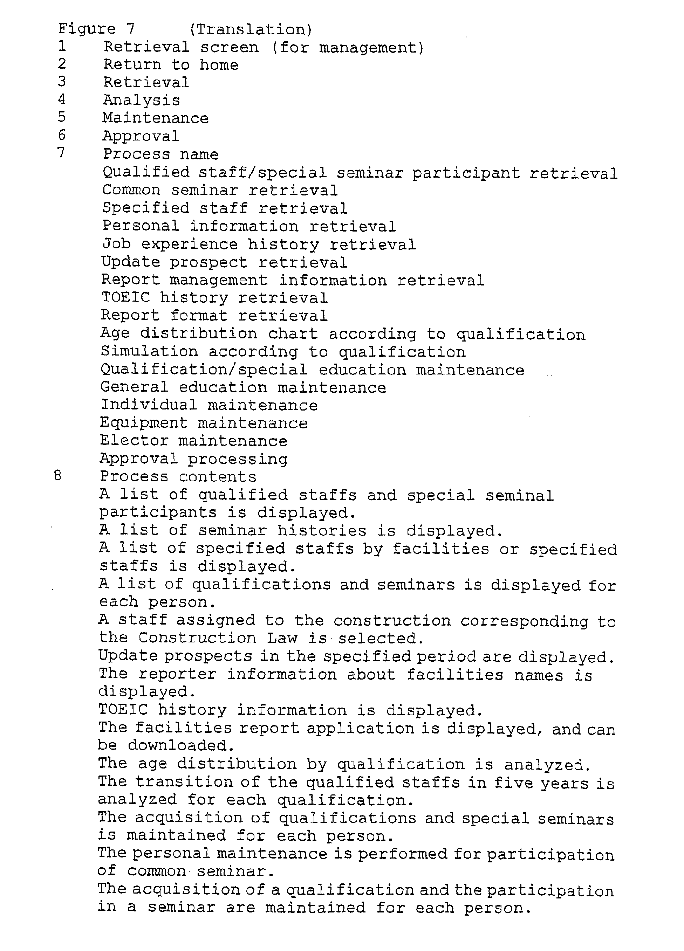

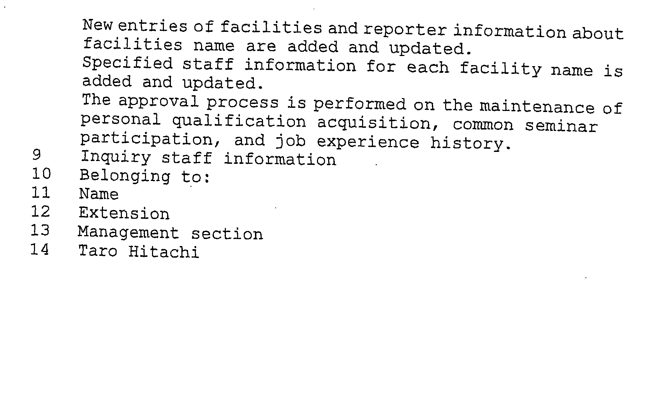

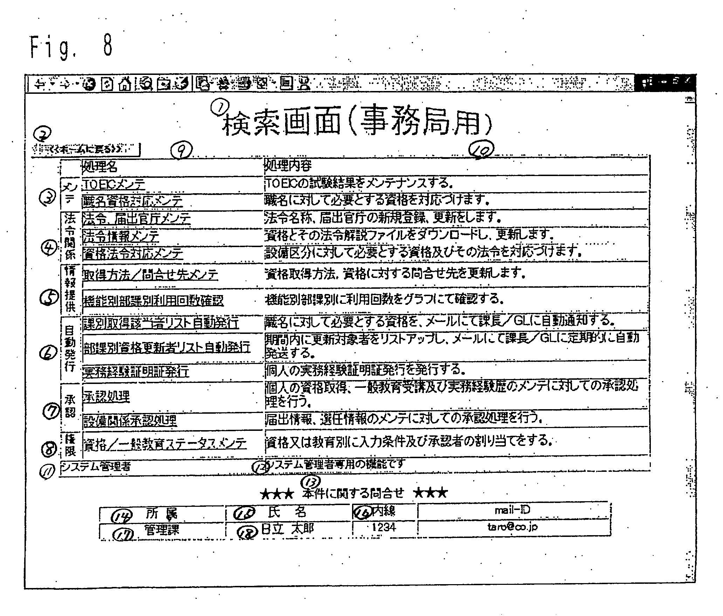

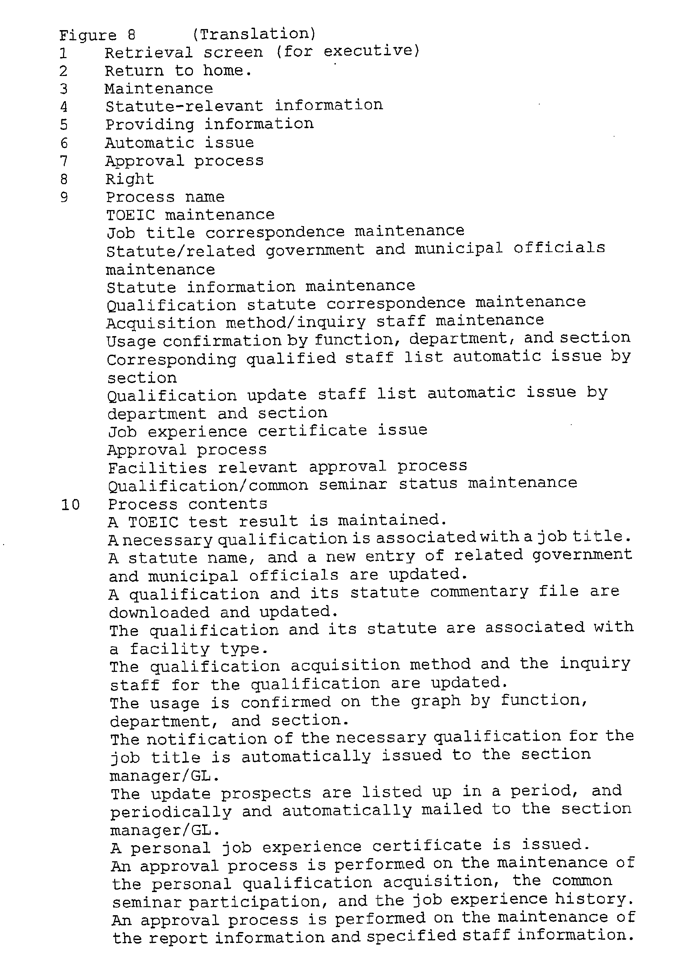

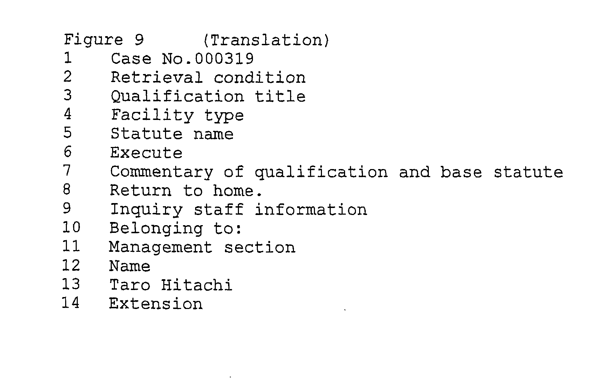

The qualification relevant information can be requested and provided in the following procedure.
(a) The management company 1 sets (publishes) a home page (hereinafter referred to as a management HP) for supply of a management service according to the present invention through a network in advance.
(b) The user of the corporation 2 accesses the management HP through the terminals 2a to 2c, inputs his or her user ID and password in the corresponding fields, and requests user authentication and access right authentication.

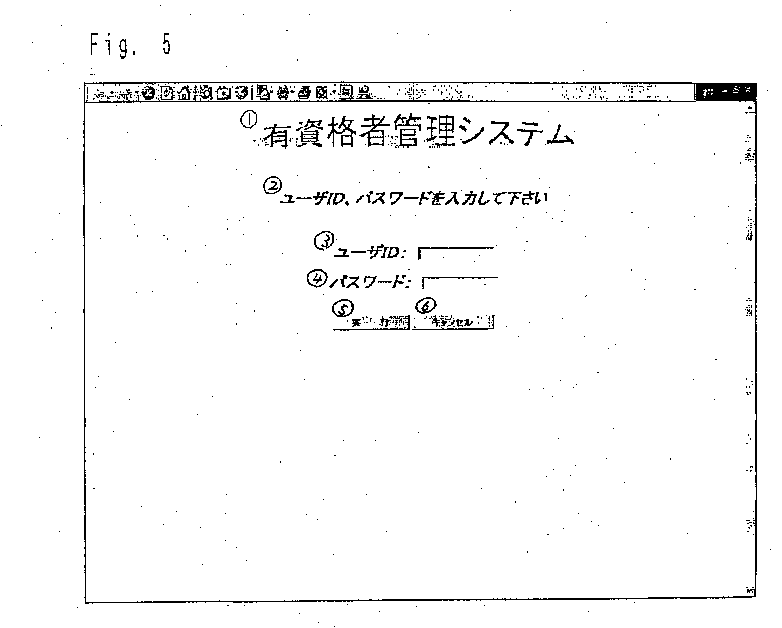

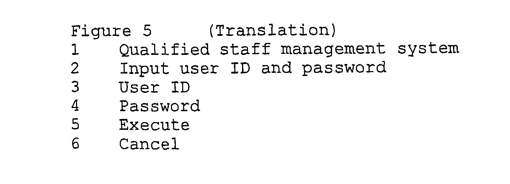

   Figure 5 shows an example of a screen on which a request for user authentication and access right authentication (hereinafter referred to as an access authentication request) is issued. The user inputs his or her user ID and password in the respective input fields (input areas) on the login screen shown in Figure 5, and presses the execution button, thereby issuing an authentication request. The information transmitted and received through the network in response to the authentication request is coded information.
(c) The access right information management unit 1f of the management system inputs the information, that is, the user ID and password, through the network 9, compares the information with the registered information, and authenticates the user (confirming the entry of the user) and authenticates the access right (confirming the access right for an available function) .
(d) If the user can be authenticated, the management system displays a common menu screen (Figure 6) on the terminals 2a to 2c of the user who requested the access authentication, and records an access log on the service record management unit 1c.
(e) The user selects a desired function on the common menu screen displayed on the terminals 2a to 2c. If the function is selected on the common menu screen, then a condition input screen (as shown in Figure 9) corresponding to the function is displayed on the terminals 2a to 2c.
(f) The user inputs a condition into the corresponding field on the condition input screen, and requests the management company 1 to obtain desired qualification relevant information.
(g) The AP management unit 1b of the management system inputs the condition input by the user on the terminals 2a to 2c (hereinafter referred to as a request condition) through the network 9, extracts required statute information, operation condition and the like, and records the used log to the service record management unit 1c. The required statute information is extracted from the statute information management unit 1d, and the required operation condition, etc. is extracted from the operation condition management unit 1e. That is, the request condition is a retrieval condition for retrieval of the information.
   The AP management unit 1b transmits the extracted information, etc. and the corresponding AP (application program) to at least one of the terminals 2a to 2c of the user who requested the service, the personal information management unit 2d, the facilities information management unit 2e, and the operation condition management unit 2f of the corporation 2 through the network 9 (providing qualification relevant information).
(h) The transmitted AP obtains qualification information, etc. corresponding to the request condition according to the information in the personal information management unit 2d, the facilities information management unit 2e, and the operation condition management unit 2f of the corporation 2 (extracted), and displays the obtained qualification information, etc. on the terminals 2a to 2c of the user who requested the service. When obtaining the qualification information, etc., the AP applies the statute information, the operation condition, etc. extracted in (g) above. The statute information, the operation condition, etc. extracted in (g) above are hereinafter referred to as the information accompanying the AP.

According to an embodiment of the present invention, by displaying the information relating to at least a new prospective facilities manager on the terminal of the user, the user can easily and quickly change the facilities manager in the corporation 2 according to the information displayed on the terminal. In addition, the information relating to at least one of the age distribution of qualified staffs and the predicted change over time in number of qualified staffs in the corporation 2 is displayed on the terminal of a user, thereby allowing the user to easily prepare a plan to appropriately maintain facilities managers and human resources required in operation management in the future. The maintenance plan includes a recruit plan for facilities managers and human resources required in operation management, a qualification update plan, a qualification acquisition plan, etc. Thus, a user can reserve and maintain facilities managers and human resources required in operation management as planned in the corporation 2.

In the above mentioned embodiment, the AP operates in the computer of the corporation 2 which requests a service. In this case, the management system transmits the AP and the information accompanying the AP to the computer of the corporation 2 each time a request for a service is received. This process is not efficient for the management company 1 and the corporation 2.

To improve this, for example, when the AP and the information accompanying the AP transmitted from a management system to a corporation canbe reused, qualification information, etc. corresponding to the request condition is obtained using the AP and the information accompanying the AP, and the qualification information, etc. can be displayed on the terminals 2a to 2c.

In this case, the AP management unit 1b of the management system stores, for example, transmission data information (the AP and the information accompanying the AP) as associated with the request condition in the service record management unit 1c. On the other hand, the AP and the information accompanying the AP transmitted from the AP management unit 1b, are stored as associated with the request condition as received data information in the operation condition management unit 2f of the corporation 2. When the AP management unit 1b inputs the request condition from the user, it compares the input request condition with the request condition stored in the service record management unit 1c, and determines that the transmitted data information can be reused if they match each other.

If the information can be reused, the AP management unit 1b transmits the input request condition to the operation condition management unit 2f. The operation condition management unit 2f extracts the received data information corresponding to the request condition received from the AP management unit 1b, and transmits the received data information to the terminals 2a to 2c of the user who specified the request condition. Then, the process similar to the process described in (h) above is performed.

Furthermore, the AP management unit 1b updates the received data information in the operation condition management unit 2f by transmitting the updated information corresponding to the request condition to the operation condition management unit 2f in a predetermined period or on a predetermined date (for example, on the first and twentieth days each month) . Such contents (conditions) of a service are to be determined in a management contract.

As described above, the management company 1 stores (records) the service record information (data) in the service record management unit 1c each time the management company 1 provides qualification information, etc. for the corporation 2. The management company 1 provides service record information for the financial institution 6 through the network 9 (reporting a service record).

The management company 1 makes in advance an agency contract relating to the collection and the payment of fees (hereinafter referred to as a fee collection and others agency contract) with the financial institution 6. The financial institution 6 computes the amount billed depending on the service record information provided by the management company 1, determines the amount billed in a predetermined period, and charges for the service. According to the fee collection and others agency contract, the financial institution 6 provides the service record information for the corporation 2 on behalf of the management company 1, and charges the corporation 2 for the corresponding service.

The corporation 2 confirms the service record information provided by the financial institution 6. Unless there is a problem to be solved, the amount billed for the service is paid to the financial institution 6. According to the fee collection and others agency contract, the financial institution 6 pays the service fee collected from the corporation 2 to the management company 1.

According to the fee collection and others agency contract, the management company 1 computes the agency commission for the above mentioned agency job for a predetermined period, and pays the computed amount to the financial institution 6. The agency commission can be paid on a fixed-price basis, on a usage basis, on a fixed-price and usage basis, etc. The payment on the fixed-price basis refers to the method of computing the agency commission based on the amount (frequency) of the agency job performed in a predetermined period.

The management company 1 makes a statute information maintenance contract with the statute maintenance company 4 to update the information relating to statutes, etc. The statute maintenance company 4 collects the information relating to statutes, etc. published by the government and municipal officials based on the keyword and the condition determined by the contract. There are a plurality of target government and municipal officials, but Figure 2 shows only the government and municipal officials 7. The range of collected information is not limited to the electronic information published through the network, but canbe applied to the information outside the network (for example, the information through paper media such as books, magazines, etc.).

The statute maintenance company 4 provides new information collected as described above as updated information for the management company 1 through the network 9. A method of providing updated information (statute information) can be a method of providing the updated information at any time when it is obtained by the statute maintenance company 4, a method of collectively providing the updated information obtained by the statute maintenance company 4 in a predetermined period, and a combination method of the above mentioned methods. Which method to use is determined in the statute information maintenance contract in advance.

The contents of the provided statute information can be the actual statute itself, the excerpt or abstract of the statute, or a mixture of both. In case an excerpt/abstract of the statute is stored, the statute maintenance company 4 can confirm the contents with the government and other public offices 7 if necessary. As for the form of the statute information being provided, if the provided information is substantive, the statute maintenance company 4 can provide the address (URL) of the computer that stores the statute information and notify the management company 1 that the statue information has been updated. The contents and the forms of the statute information being provided are determined in advance in the statute information maintenance contract.

The statute information management unit 1d updates stored statute information according to the update information provided by the statute maintenance company 4.

The statute maintenance company 4 periodically provides maintenance log information relating to the above mentioned information collecting job and an updated information providing job for the financial institution 6 (reporting a maintenance record). The financial institution 6 computes a maintenance fee according to the maintenance log information provided by the statute maintenance company 4 based on the statute information maintenance contract, and pays the maintenance fee to the statute maintenance company 4 on behalf of the management company 1. The maintenance fee can be paid on a fixed-price basis, on a usage basis, on a fixed-price and usage basis, etc.

The management company 1 pays the agency commission for the above mentioned agency job according to the fee collection and others agency contract collectively for a predetermined period. The agency commission can be paid simultaneously to the corporation 2 or separately.

The management company 1 makes an insurance contract relating to the information leakage, etc. with the insurance company 5. The insurance contract is made on fears that the corporation 2 suffers a loss by information leakage, damage or destruction to information, a delay or stop of services, etc. (hereinafter referred to as information leakage, etc.) within the range of the responsibility of the management company 1.

The contents of the insurance contract is also described in the management contract, and the corporation 2 can confirm the contents of the compensation (guarantee), etc. in the management contract. The management company 1 can recommend that the corporation 2 and the statute maintenance company 4 make a contract similar to the above mentioned insurance contract with the insurance company 5.

The financial institution 6 periodically pays a premium for the insurance contract to the insurance company 5 on behalf of the management company 1. The management company 1 pays the agency commission for the agency job to the financial institution 6 collectively for a predetermined period according to the fee collection and others agency contract. The agency commission can be paid simultaneously to the corporation 2 and the statute maintenance company 4 or separately.

When a situation infringing the insurance contract (information leakage, nullified qualification by lack of statute maintenance, a delayed service of the management company 1 by a trouble with the information system of, for example, the corporation 2) occurs, the management company 1 and the corporation 2 or the statute maintenance company 4 quickly reports to the insurance company 5 that the information leakage, etc. has occurred (reporting information leakage, etc.) . Upon receipt of the report of the information leakage, etc. from the management company 1, the corporation 2, or the statute maintenance company 4, the insurance company 5 starts surveying the actual conditions, and reports the survey result to the management company 1, the corporation 2, or the statute maintenance company 4.

When it becomes clear by the survey of actual conditions that the situation infringes the insurance contract (if the compensation conditions described by the insurance contract are satisfied), the insurance company 5 pays the insurance (compensation) based on the damage on the corporation 2 to the corporation 2. The insurance can be paid not only with money but also with labor. If the insurance is paid to the corporation 2, the insurance company 5 immediately reports the payment record to the management company 1.

If it becomes clear according to the survey of the actual conditions by the insurance company 5 that there has been an influence on the service provided by the management company 1 within the responsibility of the corporation 2 or the statute maintenance company 4, then the management company 1 requests the financial institution 6 to charge for the influence on the service. Upon receipt of the request, the financial institution 6 computes the influence-on-service fee depending on the level of the influence based on the management contract, and charges the corporation 2 or the statute maintenance company 4 for the influence on the service on behalf of the management company 1. The corporation 2 or the statute maintenance company 4 pays the billed influence-on-service fee to the financial institution 6.

The financial institution 6 pays the influence-on-service fee collected from the corporation 2 or the statute maintenance company 4 to the management company 1 according to the fee collection and others agency contract. The management company 1 pays the agency commission for the above mentioned agency job to the financial institution 6 collectively for a predetermined period according to the free collection and others agency contract. The agency commission can be paid simultaneously to the corporation 2, the statute maintenance company 4, and the insurance company 5 or separately.

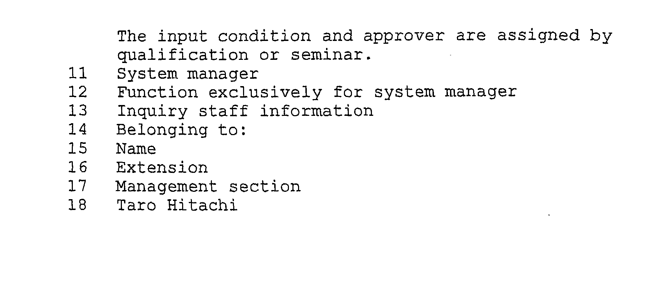

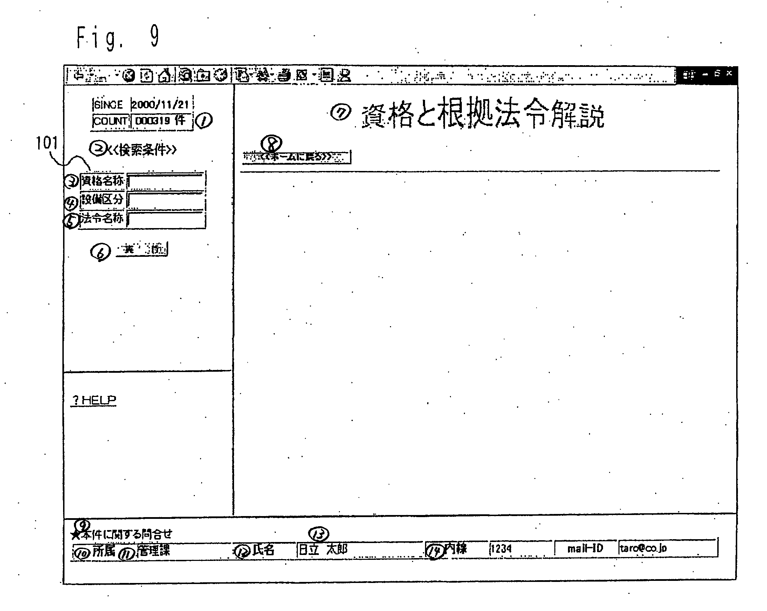

Practically described below is the process of the user of the corporation 2 obtaining qualification relevant information from the management system of the management company 1. The user first inputs a user ID and password on the login screen shown in Figure 5, and displays a common menu screen shown in Figure 6. On the common menu screen, a common user function 100 which is a menu for a common user, a manager function 110 which is a menu for a manager system user, and an executive function 120 which is a menu for an administrator are displayed together. Furthermore, at the bottom of Figure 6, inquiry staff information is displayed as in Figures 7 and 8.

A common user can use only the common user function 100. A manager system user can use the common user function 100 and the manager function 110. An administrator can use all of the common user function 100, the manager function 110, and the executive function 120. As for the scope of view (retrieval) of qualification information and seminar information, the common user can view only the information about the user only, the manager system user can view the information relating to the user and all of his or her staffs, and the administrator can view the information of the entire staffs in the corporation 2.

The common user function 100 has two menus, that is, an information reference menu and a maintenance menu. The information reference menu has two processing menus, that is, 'qualified staff acquisition method/inquiry' and 'qualification and base statute commentary'. The maintenance menu has three processing menus, that is, 'personal maintenance', 'personal job experience history maintenance', and 'change of password'.

If the 'qualified staff acquisition method/inquiry' is selected on the common menu screen, the information relating to the contents of a qualification, and a qualification acquisition method is displayed on the terminal screen of the user. If the 'qualification and base statute commentary' is selected, then a facility type, a base statute of facilities management, corresponding qualification titles, etc. are displayed on the terminal screen of the user.

If the 'personal maintenance' is selected, the screen for execution of the qualification information and maintenance acquired by a person is displayed on the terminal of the user. When the 'personal job experience history maintenance' is selected, the screen for execution of the personal job experience history occurring in the job and the maintenance is displayed on the terminal of the user. When the 'change of password' is selected, the screen for changing a personal password is displayed on the terminal of the user.

A menu can be selected by clicking a cursor after moving it into the menu position to be selected on the common menu screen. The menu can be similarly selected on the screens in and subsequent to Figure 6. On the screen shown in and subsequent to Figure 6, a selectable menu is underlined.

The manager system user and the administrator can display the management menu screen (retrieval screen) shown in Figure 7 on the terminal by selecting the manager function 110 on the common menu screen shown in Figure 6. The management menu screen has four menus, that is, retrieval, analysis, maintenance, and approval.

Retrieval has the following nine processing menus; qualified staff/special seminar participant retrieval, common seminar retrieval, specified staff retrieval, personal information retrieval, job experience history retrieval, update prospect retrieval, report management information retrieval, TOEIC history retrieval, and report format retrieval. Analysis has the following two processing menus; age distribution chart by qualification, and simulation by qualification. Maintenance has the following five processing menus; qualification/special seminar maintenance, common seminar maintenance, personal unit maintenance, facilities maintenance, and specified staff maintenance. Approval has only one menu.

If qualified staff/special seminar participant retrieval is selected on the management menu screen, then a list of qualified staffs is displayed on the terminal screen of the user. If common seminar retrieval is selected, then a list of seminar histories is displayed on the terminal screen of the user. If specified staff retrieval is selected, then a list of specified staffs by facilities is displayed on the terminal screen of the user. If personal information retrieval is selected, then a list of personal qualifications is displayed on the terminal screen of the user.

If job experience history retrieval is selected, then a screen for retrieval of the job experience history generated in the operations is displayed on the terminal of the user. If update prospect retrieval is selected, then a qualification update prospect in the specified period is displayed on the terminal screen of the user. If report management information retrieval is selected, then report information by facilities is displayed on the terminal screen of the user.

If TOEIC history retrieval is selected, then a personal TOEIC mark history is displayed. If report format retrieval is selected, then a list of formats to be reported by facilities to the government and municipal officials is displayed, and can be downloaded on the terminal of the user as necessary.

If age distribution chart by qualification is selected, an age distribution chart of qualified staffs is displayed by qualification on the terminal screen of the user. If simulation by qualification is selected, then a screen for simulation of predicted change over time in qualified staffs by qualification is displayed on the terminal of the user.

If qualification/special seminar maintenance is selected, then a screen for execution of maintenance of qualified staffs by qualification is displayed on the terminal of the user. If common seminar maintenance is selected, then a screen for maintenance of participants of seminars by common seminar is displayed on the terminal of the user. When personal unit maintenance is selected, then a screen for maintenance of qualification acquisition and common seminar participants by person is displayed on the terminal of the user.

If facilities maintenance is selected, then a screen for addition and update of reporter information about new entries of facilities and facility names is displayed on the terminal of the user. If specified staff maintenance is selected, then a screen for addition and update of specified staff information by facility name is displayed on the terminal of the user. If approval process is selected, then a screen for an approval process relating to the qualification acquisition and common seminars maintained by each employee is displayed on the screen of the user.

When the administrator selects the executive function 120 on the common menu screen shown in Figure 6, an executive menu screen (retrieval screen) shown in Figure 8 can be displayed on the terminal. The executive menu screen has seven menus, that is, maintenance, statute relevant information, information providing, automatic issue, approval, right, and system manager. However, 'system manager' is a menu available only by a system manager among administrators.

Maintenance has two processing menus, that is, TOEIC maintenance and job title correspondence maintenance. Statute-relevant information has three processing menus, that is, statute/related government and municipal officials maintenance, statute information maintenance, and qualification statute correspondence maintenance. Information providing has two processing menus, that is acquisition method/inquiry staff maintenance and usage confirmation by function, department, and section. Automatic issue has three processing menus, that is, corresponding qualified staff list automatic issue by section, qualification update staff list automatic issue by department and section, and job experience certificate issue. Approval has two processing menus, that is, approval process and facilities relevant approval process. Right has one processing menu, that is, qualification/common seminar status maintenance. System manager has nine processing menus, that is, special right holder maintenance, non-approval job experience maintenance, qualification/seminar title maintenance, contact update, password maintenance, non-approval qualification maintenance, non-approval common seminar maintenance, qualification/seminar information non-approval condition deletion, and facilities deletion.

If TOEIC maintenance is selected on the executive menu screen shown in Figure 8, then a screen for individual and personal maintenance of TOEIC data is displayed on the terminal of the user. If job title correspondence maintenance is selected, then a screen for update of correspondence between a job title and a qualification required for the job title (job title qualification correspondence maintenance) is displayed on the terminal of the user.

If statute/related government and municipal officials maintenance is selected, then a screen for a new entry and update of a statute name, related government and municipal officials is displayed on the terminal of the user. If statute information maintenance is selected, then a screen for update of a qualification and a file for the related statute commentary is displayed on the terminal of the user. If qualification statute correspondence maintenance is selected, then a screen for update of correspondence between a qualification required for facilities and a relevant statute is displayed on the terminal of the user.

If acquisition method/inquiry staff maintenance is selected, then a screen for update of a qualification acquisition method file and update of an in-house inquiry staff for the qualification is displayed on the terminal of the user. If usage confirmation by function, department, and section is selected, then the usage by function and/or department and section is displayed as a graph on the terminal of the user.

If corresponding qualified staff list automatic issue by section is selected, then the management system determines (extracts) a qualification required for a job title based on the job title qualification correspondence, and automatically transmits to the manager system user a notification of a staff to be qualified. If qualification update staff list automatic issue by department and section is selected, then the management system lists staffs to be updated in a predetermined period by department and section, and automatically transmits an update prospect list to the manager system user.

If approval process is selected, then a screen for an approval process on the maintenance of personal qualification acquisition, common seminar participant and job experience history of displayed on the terminal of the user. If facilities relevant approval process is selected, then a screen for an approval process on maintenance of report information and specified staff information is displayed on the terminal of the user. If qualification/common seminar status maintenance is selected, then a screen for assignment of an input condition and an approval order by qualification or seminar is displayed on the terminal of the user.

If special right holder maintenance is selected, then a screen for assignment of a special right to a user regardless of a job title is displayed on the terminal of the user. If contact update is selected, then a screen for update of a contact from a manager displayed in Figure 6 is displayed on the terminal of the user. If password maintenance is selected, then a screen for confirmation or change of a personal password is displayed on the terminal of the user. If non-approval qualification maintenance is selected, then a screen for maintenance of acquisition of a qualification/special seminar without approval is displayed on the terminal of the user. If non-approval common seminar maintenance is selected, then a screen for maintenance of acquisition of a common seminar without approval is displayed on the terminal of the user. If qualification/seminar information non-approval condition deletion is selected, then a screen for deletion of entered data regardless of approval condition is displayed on the terminal of the user. If facilities deletion is selected, then a screen for deletion of a facility name is displayed on the terminal of the user.

In addition, the management system performs an access alarm process and a usage output process on an administrator. In the access alarm process, the management system monitors the access frequency of each function for each user (for each person). If the monitor value is quite different from the past use record, then an alarm is transmitted to the administrator. In the usage output process, the management system transmits the information indicating the usage for each department and section as basic information of the billing condition to the monitor unit la.

On some processing menus shown in Figures 6 to 8, an example of a terminal screen of a user is practically described below.

If the user selects qualification and base statute commentary on the common menu screen shown in Figure 6, then the screen shown in Figure 9 is displayed. The title of a qualification, the facility type, the title of a statute are displayed as retrieval conditions in the left top column (condition input unit 101) shown in Figure 9. The user presses the execution button after entering either at least one of the three retrieval conditions, or nothing.

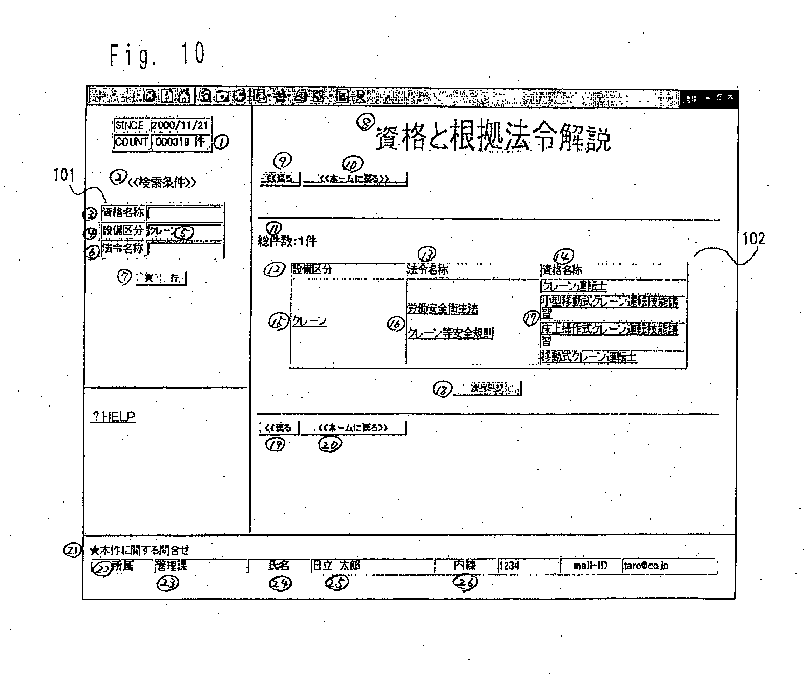

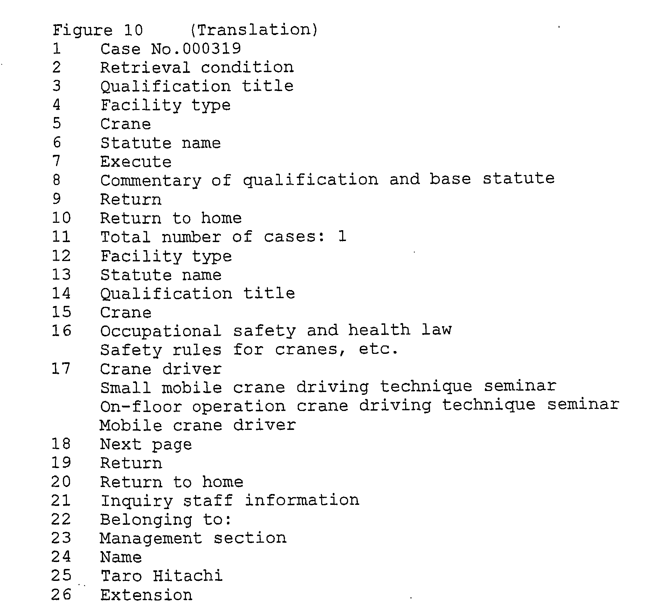

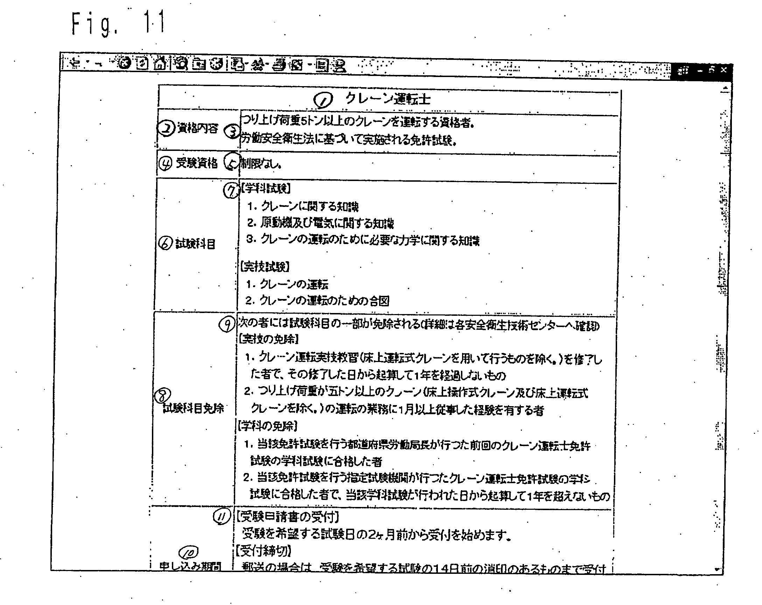

The inquiry staff information is stored in the column at the bottom in Figure 9, and HELP is displayed in the left column at the bottom. When HELP is clicked, the operating instructions are displayed on the screen. The same applies for Figures 10 to 21.

In Figure 9, for example, if 'crane' is entered in the facility type column of the condition input unit 101, and the execution button is pressed, then the screen in Figure 10 is displayed. In the right column (information display unit 102) shown in Figure 10, the titles of the corresponding statutes and qualifications are displayed for each of the input facility types.

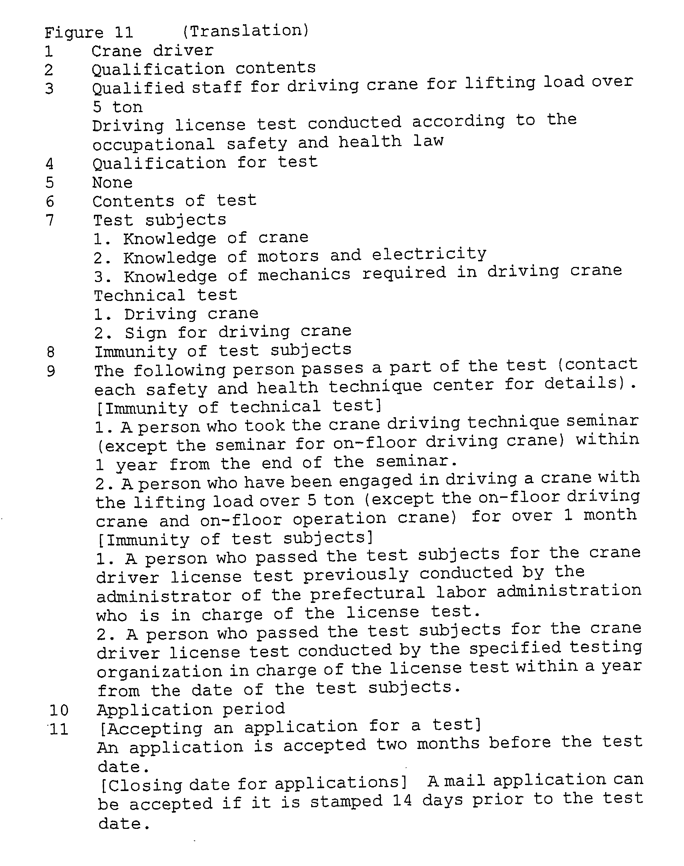

In Figure 10, for example, if 'crane driver' which is one of the titles of qualifications displayed on the information display unit 102 is clicked (selected), then the detailed information about the qualification is displayed as shown in Figure 11. The detailed information about the qualification includes the contents of the qualification, the qualification for the test, the category of the test, the application period, the date of the test, etc. In Figure 10, if one of the titles of statutes displayed on the information display unit 102 is clicked, the contents of the statute (the statute itself or the abstract thereof) are displayed. If one of the facility types displayed on the information display unit 102 is clicked, then the facilities possessed by the corporation 2 are listed for each facility type.

By monitoring the above mentioned information on the screen of the terminal, the user can be informed of the base statute for the qualification, and the contents of the qualification and the statute can be easily obtained, thereby autonomously designing the qualification acquisition environment in a corporation.

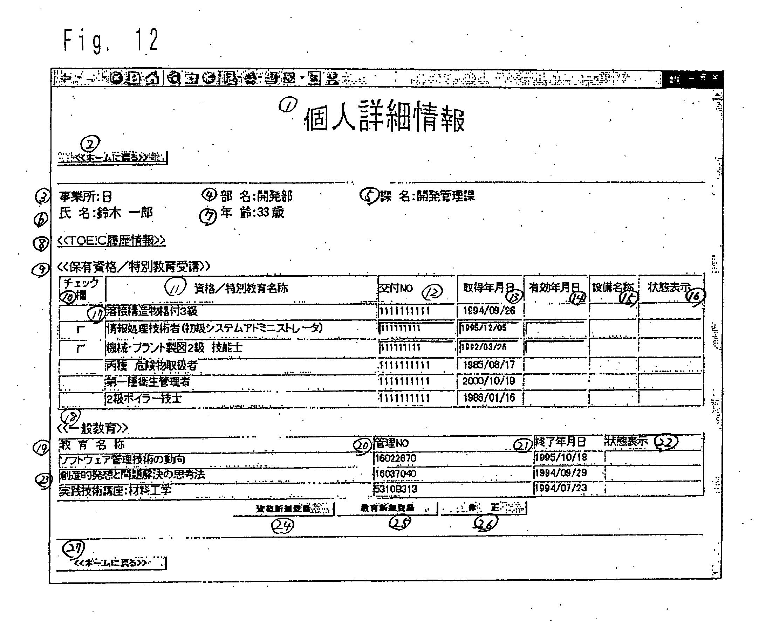

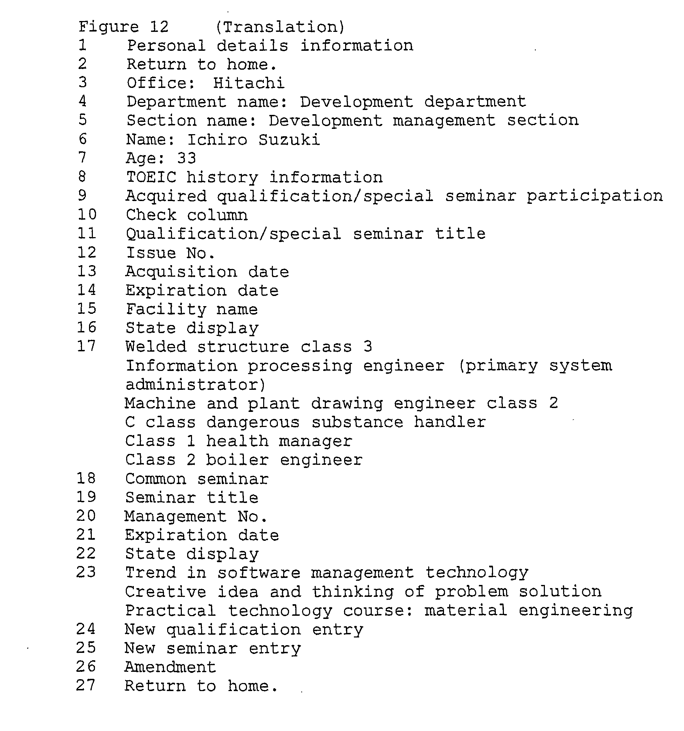

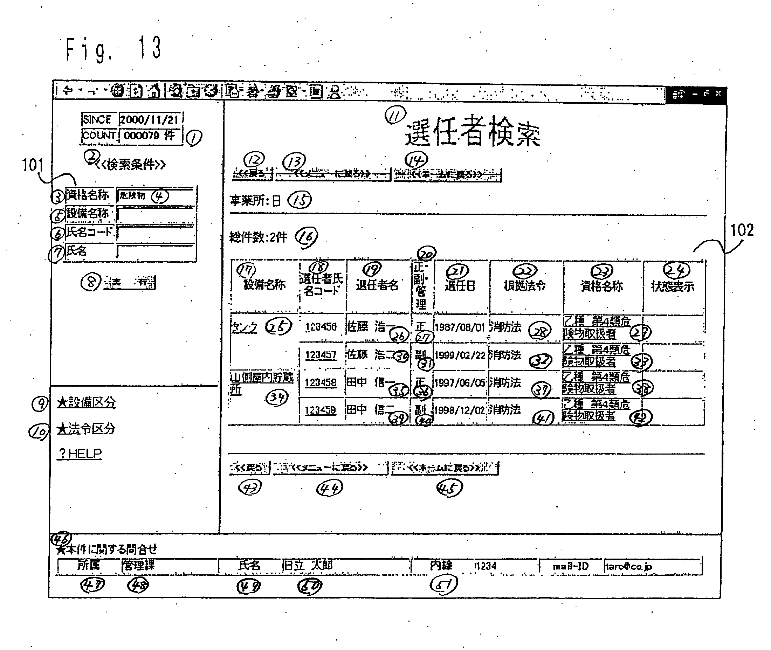

If the user selects 'personal maintenance' on the common menu screen shown in Figure 6, then Figure 12 is displayed. For example, if the user is 'Ichiro Suzuki', then displayed are the department to which the user belongs, and the name and age of the user accompanied by the acquired qualifications, mastered special seminars and common education as personal information as shown in Figure 12.

The user can press the new qualification entry button or the new seminar entry button on the screen shown in Figure 12 so that a newly acquired qualification or a newly taken seminar can be registered by the user. In addition, the user can press the amendment button on the screen shown in Figure 12 so that the information about the qualification or the seminar displayed on the screen can be amended by the user. When the word 'TOEIC' is clicked, the transition of the TOEIC score, the highest score, the lowest score, and the average score is displayed. As explained, Figure 12 is apersonal information maintenance screen and personal detailed information screen.

In the management system according to the present invention, the precision and the freshness of data are very important. To maintain the freshness of data, the management system is based on the operation of personally entering and maintaining personal data, thereby successfully maintaining the freshness of data. However, if the operation is performed, garbage information (qualifications not acquired yet, seminars not takes yet, etc.) can be mistakenly entered.

As a countermeasures, the management system assigns a status to each qualification/seminar type. The status of each qualification/seminar type comprises 'person', 'higher job title', and 'administrator', and there are 12 statutes in an approval order. For example, a legally important qualification and seminar type cannot be entered by a personal user, but can be collectively entered by the administrator. Thus, by managing the statutes depending on each qualification/seminar type, the garbage information can be avoided. The management system according to the present invention can also manage the approval state. There are five approval types, that is, 'wait for boss approval', 'wait for executive approval', 'rejection of boss', 'rejection of executive', and 'completely approved'.

In the above mentioned approval types, 'wait for boss approval' indicates the state of waiting for an approval of a manager system user. 'Wait for executive approval' indicates the state of waiting for an approval of an administrator. 'Rejection of boss' indicates the rejection of the boss. 'Rejection of executive' indicates the rejection of the administrator. 'Completely approved' indicates all approvals have been obtained.

These approval states are displayed on the screens with a different character and color depending on each state. For example, 'wait for boss approval' and 'wait for executive approval' are displayed in yellowish green, 'rejection of boss' and 'rejection of executive' are displayed in pink, and 'completely approved' is displayed in white.

The user can confirm the current approval state (wait for approval, rejection, approved, etc.) on all screens displaying personal information.

When the management system according to the present invention selects a staff for the facilities, etc. in accordance with a related statute as described later, it is necessary that the qualification of a person is completely approved. In addition, the information about the retired of mandatory retirement is not immediately deleted because the re-employment system is being considered, and the qualifications of the retired of mandatory retirement form important reference information in re-employing the retired. To distinguish the retired from the current employees (staffs), the retired are displayed in orange. Their information is stored for a predetermined period, and then deleted.

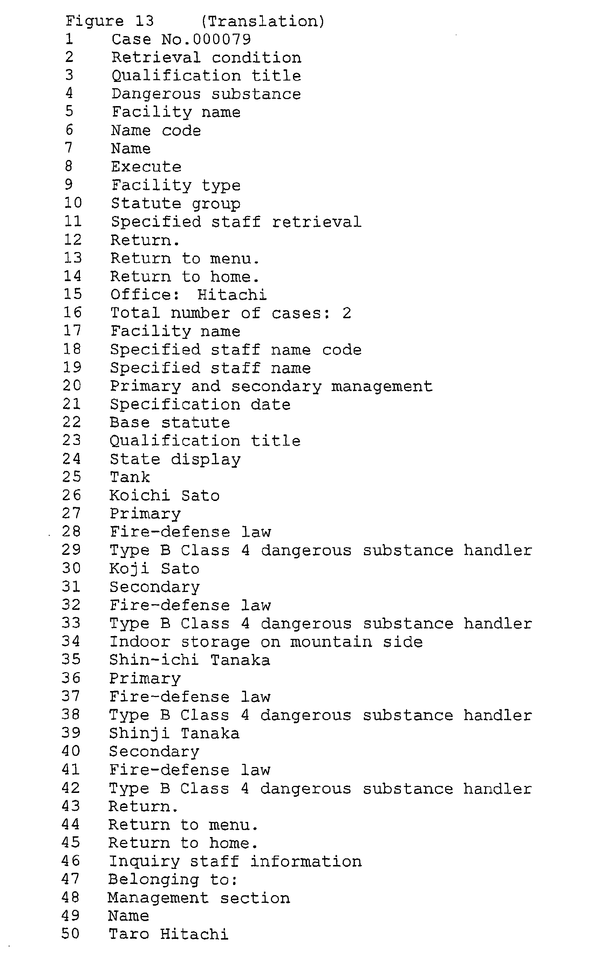

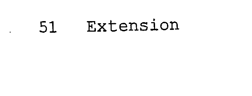

If the user selects 'specified staff retrieval' on the management menu screen shown in Figure 7, the left column shown in Figure 13 is displayed on the screen. In the left top column (condition input unit 101), qualification title, facility name, name code, and name are displayed as retrieval conditions. The user inputs either at least one of these four retrieval conditions or nothing, and then presses the execution button.

For example, if the execution button is pressed with 'dangerous articles' input into the column of the qualification title of the condition input unit 101 shown in Figure 13, then the entire screen shown in Figure 13 is displayed. In the right column shown in Figure 13 (information display unit 102), name code of specified staff, name of specified staff, primary and secondary management levels, specification date, base statute, qualification title, etc. are displayed.

In Figure 13, if one of the qualification titles displayed on the information display unit 102 is clicked, a list of employees having the qualifications is displayed, thereby allowing the user to easily grasp prospective specified staffs in checking the retirement, personnel change, etc. of the current specified staffs. In Figure 13, if one of the facility names displayed on the information display unit 102 is clicked, the reporter of the facilities and the facility relevant information are displayed.

The reverse retrieval from a reporter to facilities can be performed by selecting 'report management information retrieval' on the management menu screen shown in Figure 7. When a reporter is transferred another department or section, the scope of the influence can be grasped in advance using the above mentioned function. Furthermore, the reporter can be collectively amended by selecting 'facilities maintenance' on the management menu screen shown in Figure 7.

By monitoring the above mentioned information on the terminal, the user (manager system user and administrator) can easily and quickly change a specified staff and a reporter without fail, thereby much contributing to the observation of statutes.

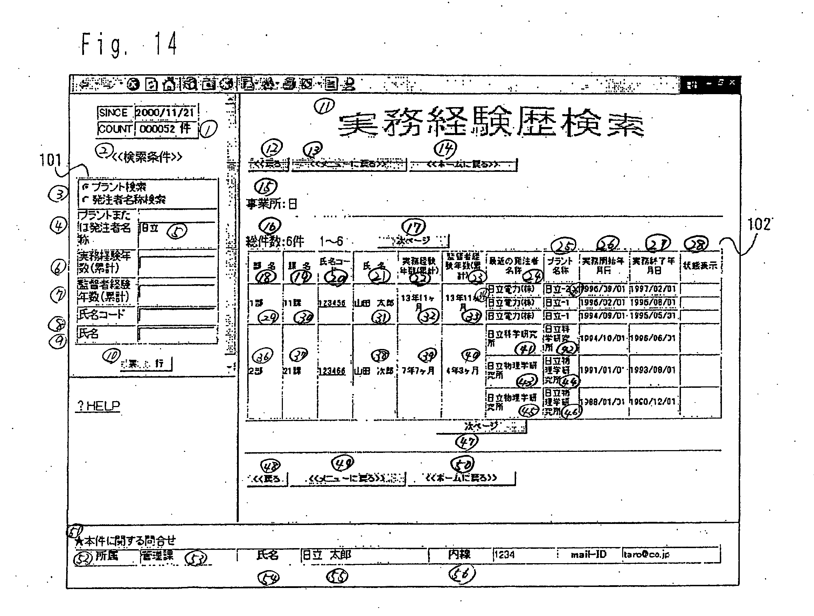

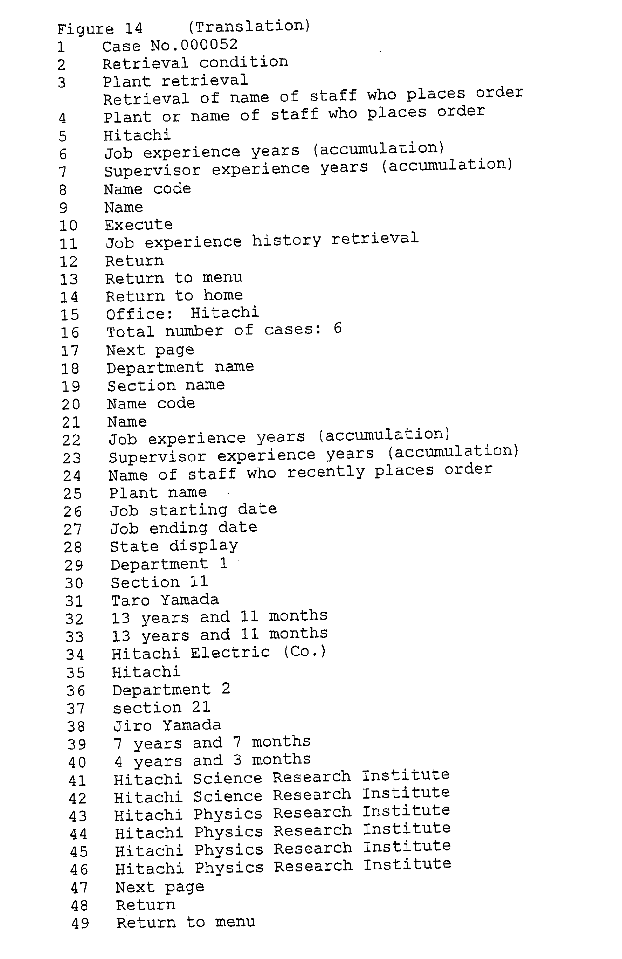

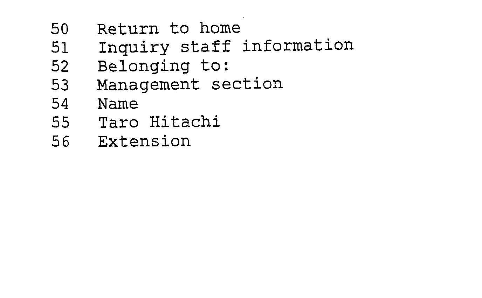

If the user selects 'job experience history retrieval' on the management menu screen shown in Figure 7, the left columns shown in Figure 14 are displayed on the screen. The left top columns (condition input unit 101) display five retrieval conditions, that is, plant name/name of staff placing order, job experience years, supervisor experience years, name code, and name. The user input either at least one of these five retrieval conditions or nothing, and then presses the execution button, thereby retrieving the job experience based on the construction industry law.

For example, if the execution button is pressed with 'Hitachi' input in the column of the plant name or the name of the staff who placed the order in the condition input unit 101, then the entire screen shown in Figure 14 is displayed. In the right columns (information display unit 102) shown in Figure 14, department name, section name, name, job experience years, supervisor experience years, name of recent staff placing order, plant name, job starting date, job ending date, etc. are displayed. Figure 14 shows the three recently experiencedplants. In Figure 14, if the name code displayed on the information display unit 102 is clicked, all job experience of the person can be displayed. Using the displayed data, a document to be presented to the Ministry of National Land and Traffic can be prepared.

By monitoring the above mentioned information on the terminal, the user (manager system user and administrator) can efficiently generate a document to be presented to the government and municipal officials based on the construction industry law, and can effectively utilize the information as reference materials in determining a staff for a new plant or maintenance of delivered products, etc. Furthermore, based on the above mentioned concept, the histories of buildings and facilities, job experience on the laws other than the construction industry law can also be similarly managed.

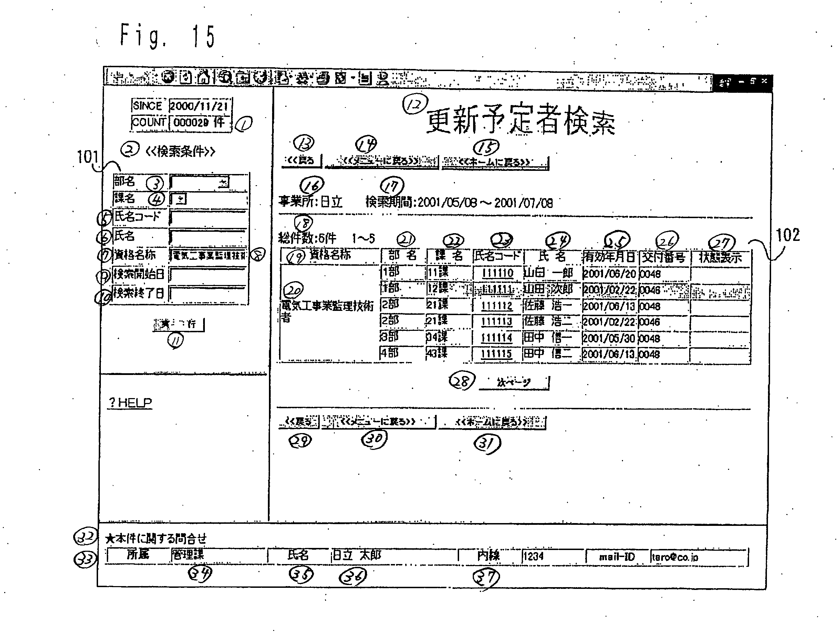

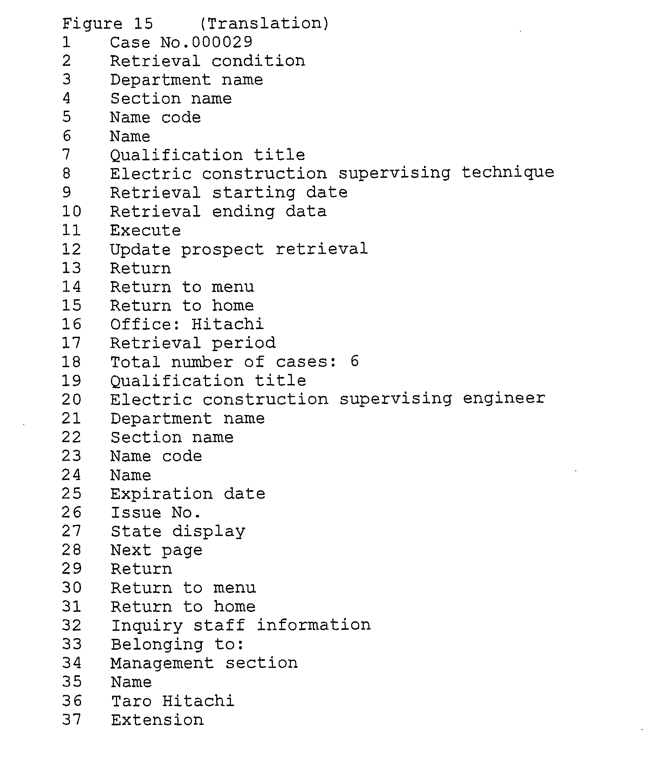

When the user selects 'update prospect retrieval' on the management menu screen shown in Figure 7, the left columns in Figure 15 are displayed on the screen. In the left top columns (condition input unit 101), seven retrieval conditions, that is, department name, section name, name code, name, qualification title, retrieval start date, and retrieval end date are displayed. The user presses the execution button after entering either at least one of the six retrieval conditions other than the retrieval start date (a retrieval execution date is the default, but can be changed), or nothing.

For example, if the execution button is pressed after entering 'electric construction administrative engineer' in the column of the qualification title in the condition input unit 101 shown in Figure 15. In the right column shown in Figure 15 (information display unit 102), the department name, section name, name code, name, effective date, issue number, etc. of a qualified staff having the input qualification are displayed. The user (manager system user and administrator) can easily grasp an update prospect for each qualification on the screen. Using the update prospect retrieving function, the qualification can be protected from becoming null. The function can also be effectively utilized in preparing a budget for maintenance of qualifications.

Relating to this function, the administrator sets 'qualification update staff list automatic issue by department and section' on the executive menu screen shown in Figure 8, thereby periodically notifying the manager system user of the prospective update information of his or her staffs, thereby further contributing to the protection against nullification of a qualification.

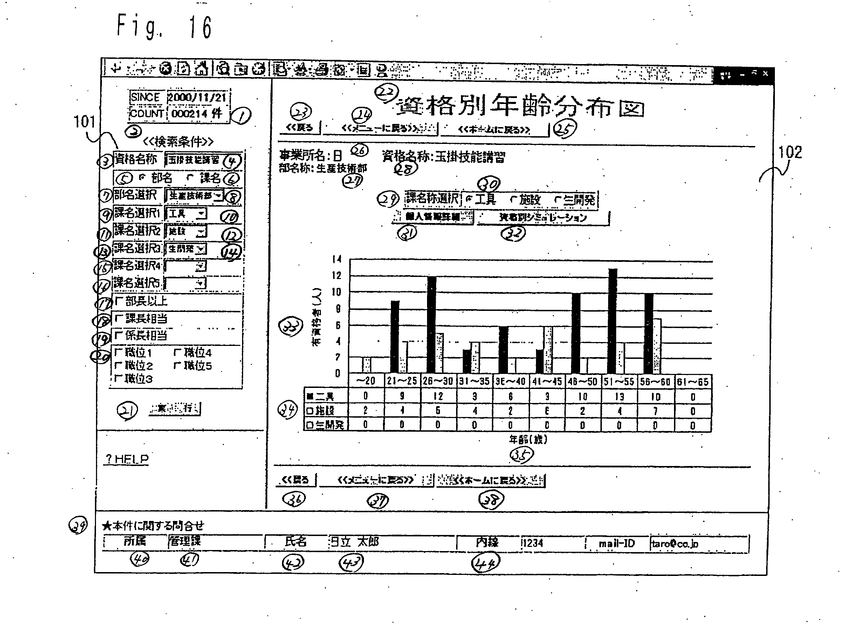

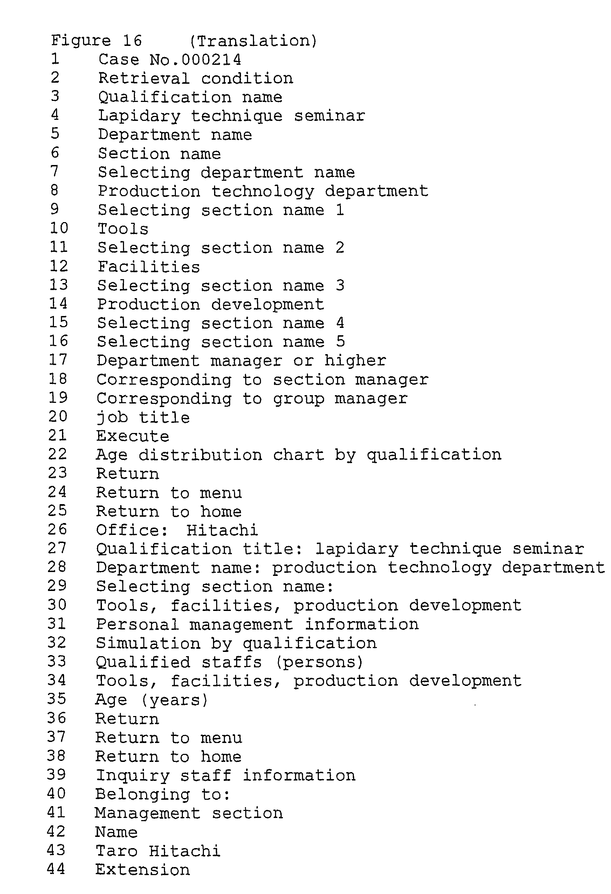

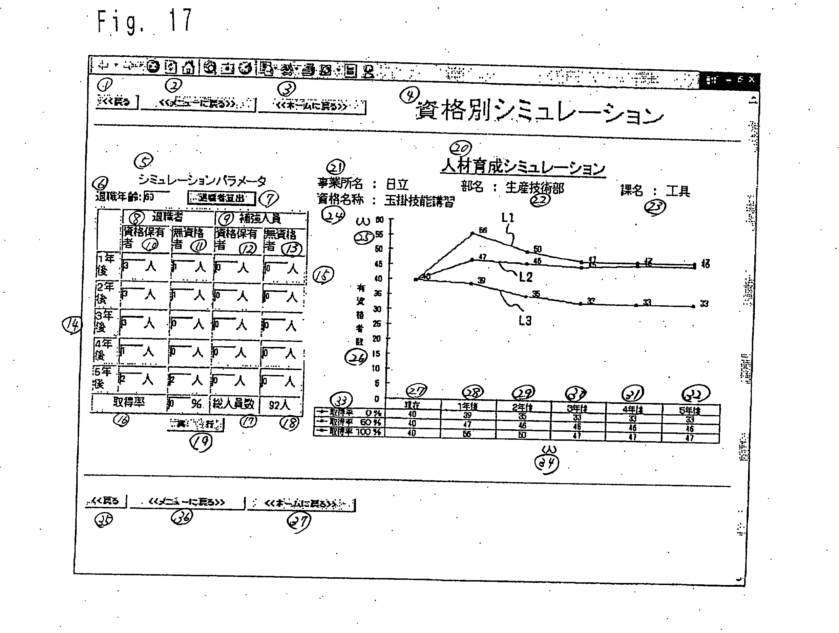

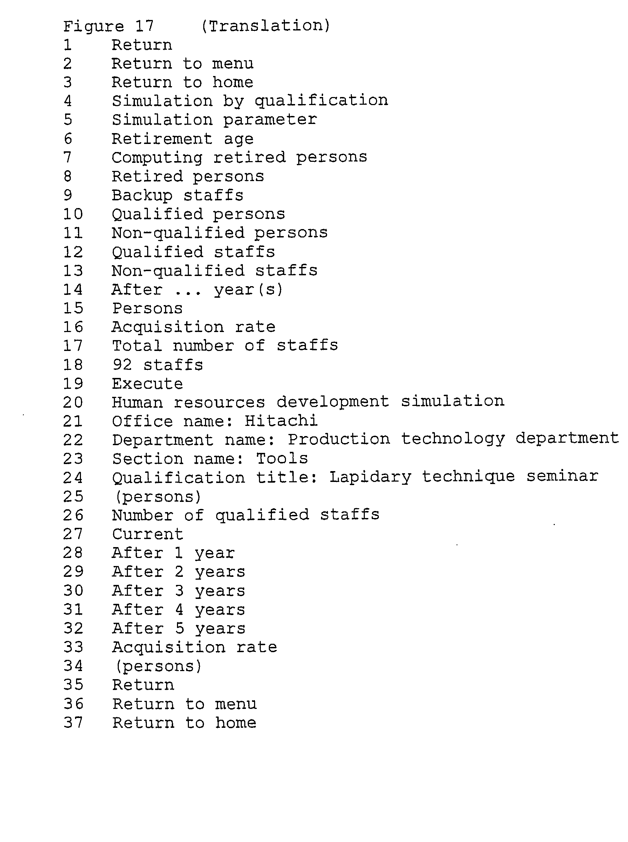

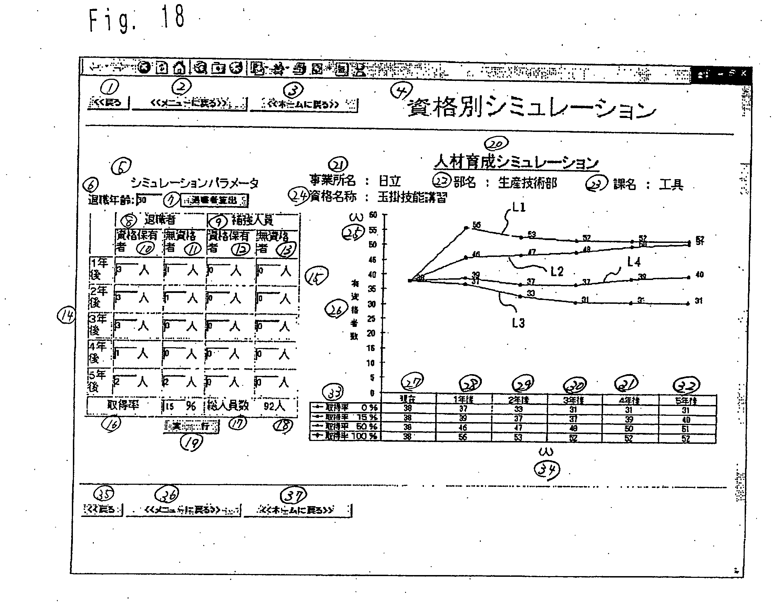

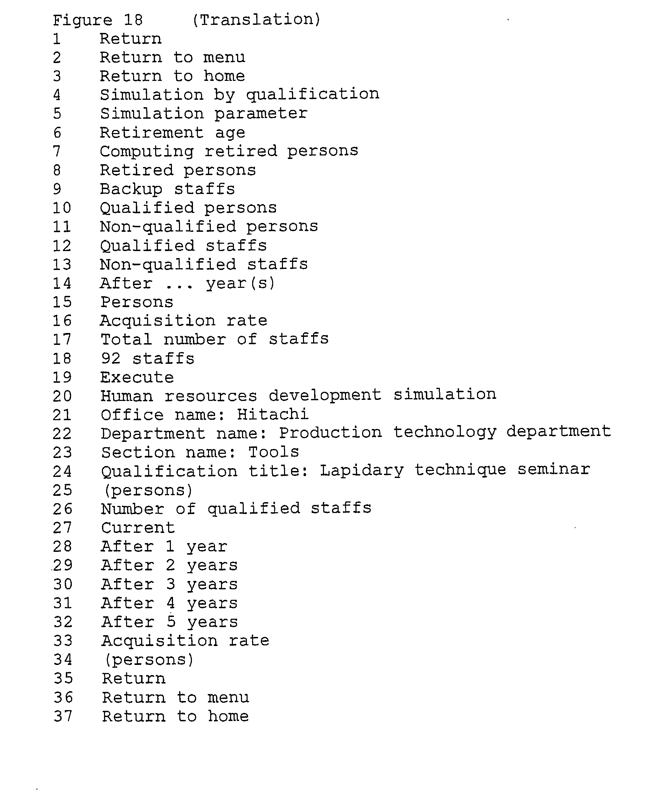

If the user selects 'age distribution chart by qualification' on the management menu screen shown in Figure 7, the left columns shown in Figure 16 are displayed on the screen. In the left top column (condition input unit 101), four retrieval conditions, that is, qualification title, department name, section name, and job type are displayed. The user presses the execution button after entering either at least one of the department name or the section name and the qualification title in the four retrieval conditions.

For example, 'lapidary technique seminar' is input in the column of the qualification title in the condition input unit 101 shown in Figure 16, 'production technology department' is selected in the column of selecting a department name, 'tools', 'facilities', and 'production development' are selected in the column of selecting a section name, and the execution button is pressed, thereby displaying the entire screen shown in Figure 16. In the right columns shown in Figure 16 (information display unit 102), a bar graph indicating the age distribution of qualified persons having the input qualification is displayed for each section (group to which a staff belongs) in the selected department. In Figure 16, if 'tool' of the information display unit 102 is selected and the personal detailed information button is pressed, then the information such as the name of a person corresponding to the bar graph is displayed.

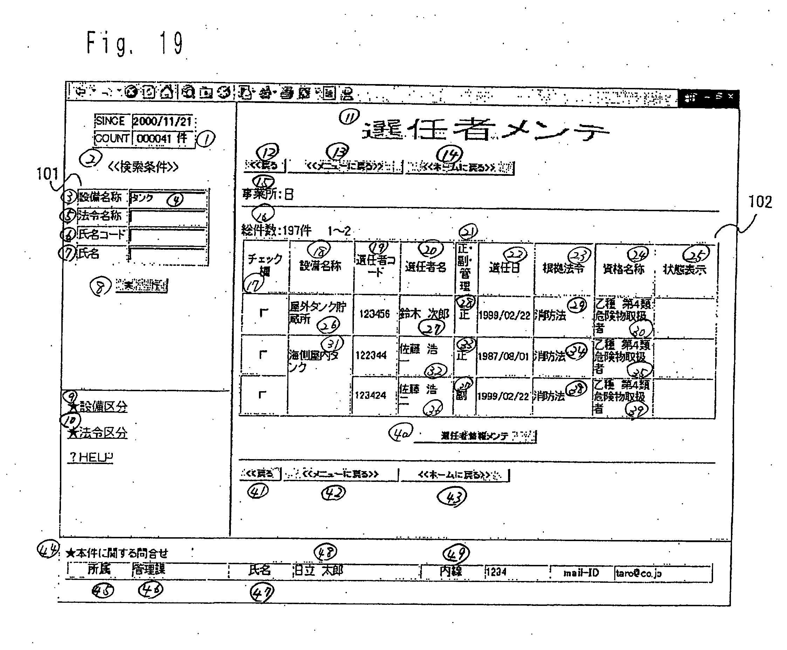

In the information display unit 102 shown in Figure 16, for example, if 'tools' is selected and the qualification simulation button is pressed, then the simulation result relating to the predicted number of qualified staffs belonging to the corresponding department shown in Figure 17 is displayed. In the left area shown in Figure 17, the retirement age, the acquisition rate of the corresponding qualification, the number of qualified and non-qualified retired staffs having the qualification, and the predicted change over time of the number of qualified and non-qualified backup staff predicted change over time are displayed as the parameters of the simulation. The number of retired is automatically displayed using the value computed from the retirement age and the birth day of each staff.

The user presses the execution button by inputting these parameters in the left area. Thus, the predicted change over time of the number of qualified staffs in five years from now is displayed in the right area. In the right area shown in Figure 17, the retirement age of 60, the acquisition rate of the qualification of 100%, 50%, and 0%, and the transition graph L1, L2, and L3 indicating the number of corresponding qualified staffs are displayed as the initial state (or standard condition).

In Figure 17, the retirement age is set at 60, but to obtain correct information even after a sudden and frequent change in organization accompanying the introduction of the future re-employment system, the global management environment, etc., the user can optionally set a retirement age in the left area shown in Figure 17. In addition, the user can arbitrarily change the number of retired and backup staffs as necessary. Furthermore, the user can arbitrarily set the acquisition rate of the qualification by referring to the standard simulation result displayed in the right area shown in Figure 17.

For example, if the user presses the execution button by entering '15%' in the column of acquisition rate in the left area shown in Figure 17, then the screen shown in Figure 18 is displayed. The display in the right area shown in Figure 18 is obtained by adding the transition line L4 indicating the number of qualified staffs corresponding to the qualification acquisition rate of 15% and the transition table corresponding to the transition line L4 to the display of the right area shown in Figure 17.

Thus, the user (manager system user and administrator) can visually confirm the age distribution by qualification and the simulation result by qualification on the screen of the terminal. Therefore, the plan of the development of human resources can be appropriately prepared, thereby obtaining stable manpower, and maintaining and reserving qualified staffs according to the statutes. That is, the facilities manager and the staffs required in managing the operations in the corporation can be reserved and maintained as planned. Furthermore, by repeating the simulation by qualification, the cost can be minimized by fully utilizing the qualified staffs in the personnel plan in the corporation.

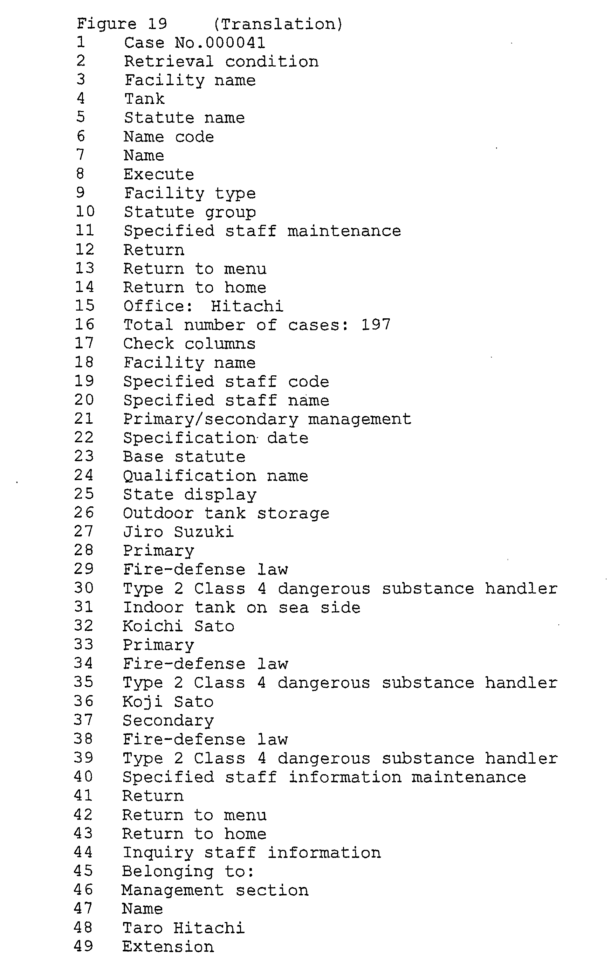

If the user selects 'specified staff maintenance' on the management menu screen shown in Figure 7, the left columns shown in Figure 19 are displayed. In the left top column (condition input unit 101), facility name, statute name, name code, and name are displayed as four retrieval condition. The user presses the execution button unconditionally or after inputting either at least one of the four retrieval conditions or nothing.

For example, if the execution button is pressed after inputting 'tank' in the column of facility name in the condition input unit 101 shown in Figure 19, then the specified staff information such as specified staff name code, specified staff name, primary and secondary management sections, specified date, base statute, qualification name, etc. is displayed for each facility name in the right column (information display unit 102) shown in Figure 19. The user presses the update button after checking the check column for the facilities to be maintained in the information display unit 102 shown in Figure 19.

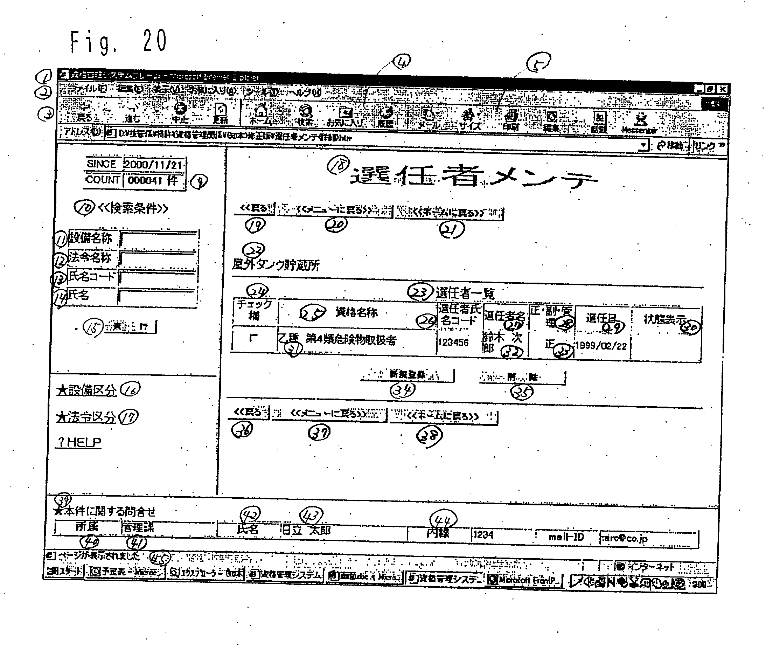

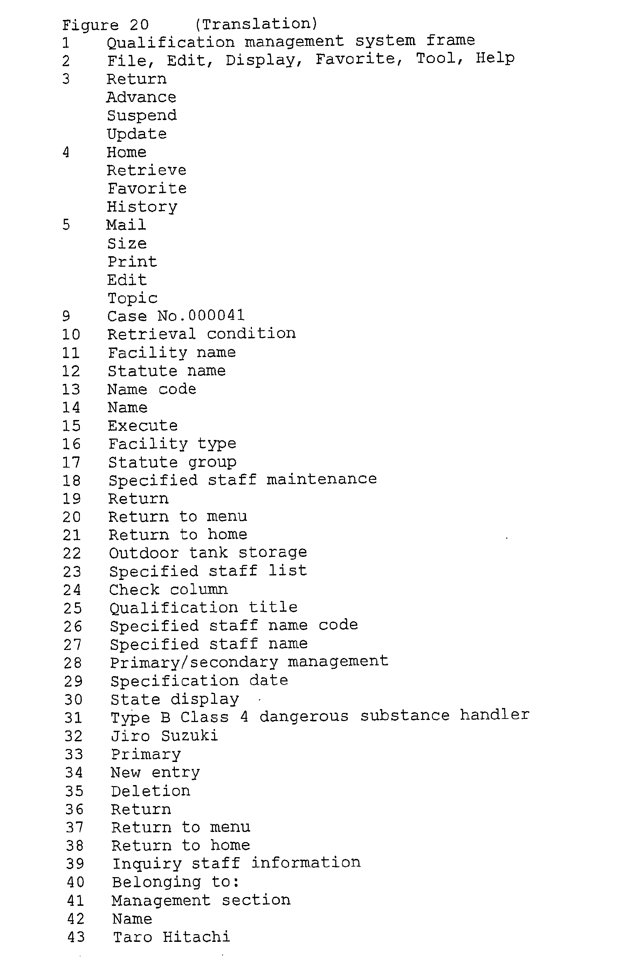

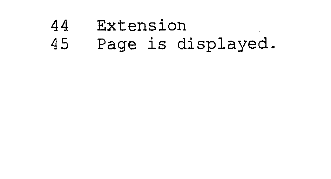

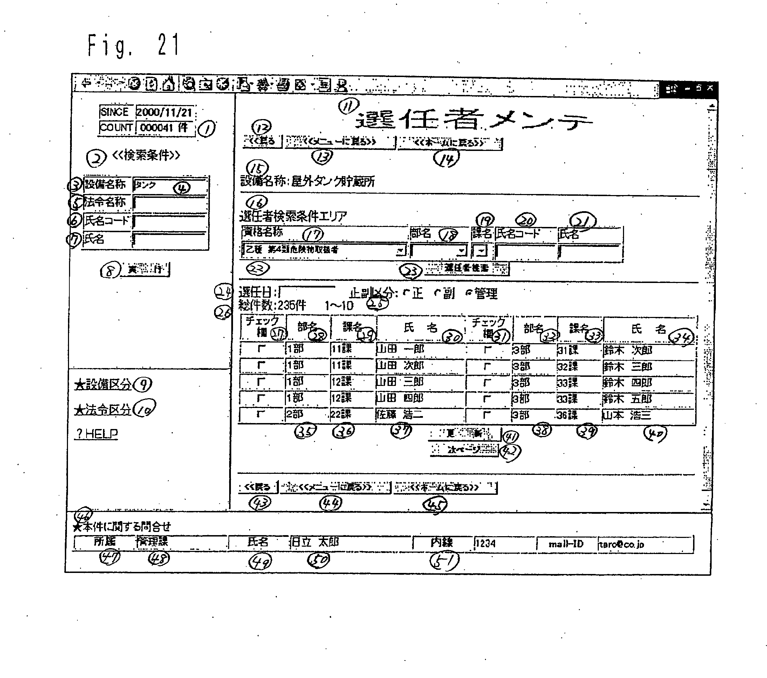

In the information display unit 102 shown in Figure 19, if the check column of, for example, an outdoor tank house is checked and the specified staff information maintenance button is pressed, then a specified staff list for facilities as shown in Figure 20 is displayed. The user selects whether a new specified staff is to be entered for selected facilities or the current specified staff is to be deleted by pressing a new entry button or a deletion button in Figure 20. If the current specified staff is to be deleted, then one or more specified staffs are to be entered in addition to the specified staff to be deleted. If this condition is satisfied, then the check column for the specified staff to be deleted is checked and the deletion button is pressed, thereby deleting the information about the selected specified staff.

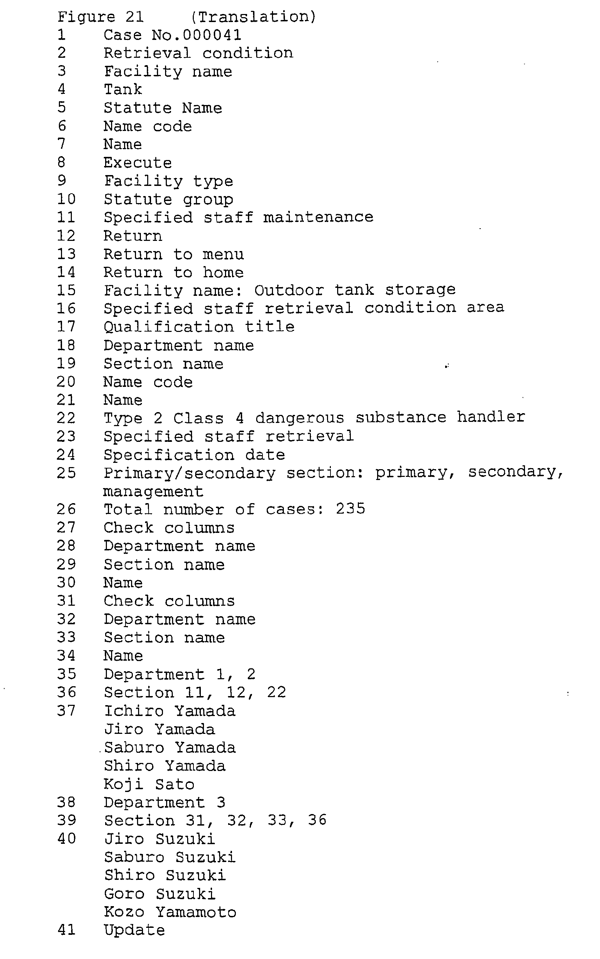

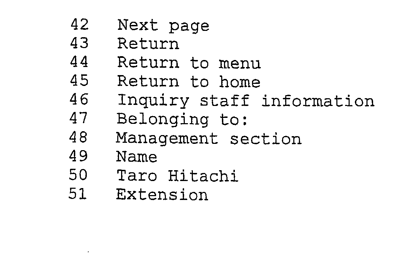

If a specified staff is newly added, the new entry button is pressed in Figure 20 to display Figure 21. In Figure 21, a necessary qualification title for the corresponding facilities and a list of employees having the qualifications (that is, prospective specified staffs) are displayed. The user selects a new specified staff from the list. To newly enter a specified staff, the check column of a selected employee is checked, a specified date is input, and a primary and secondary management sections are selected, and the update button is pressed, thereby setting the selected employee as a new specified staff.

As described above, the management company 1 manages the qualification information required in managing the operation of the corporation 2 and the relevant statute information and facilities information in conjunction. By obtaining the service of the management company 1, the administrator and the manager system user can easily and quickly change the facilities managers in the corporation 2, and can reserve and maintain facilities managers and staffs required in managing the operation of the corporation as planned.

In the first embodiment, the corporation 2 can obtain services without disclosing the confidential corporation information such as the personal information, facilities information, etc. out of the network 9. Therefore, a corporation, especially a large corporation, can effectively execute the security management for the corporation information.

On the other hand, it is a heavy load from the viewpoint of cost and management knowhow for a small or intermediate corporation to manage its corporation information such as personal information, statute information, etc. The second embodiment is described below to solve the problem (reduce the load).

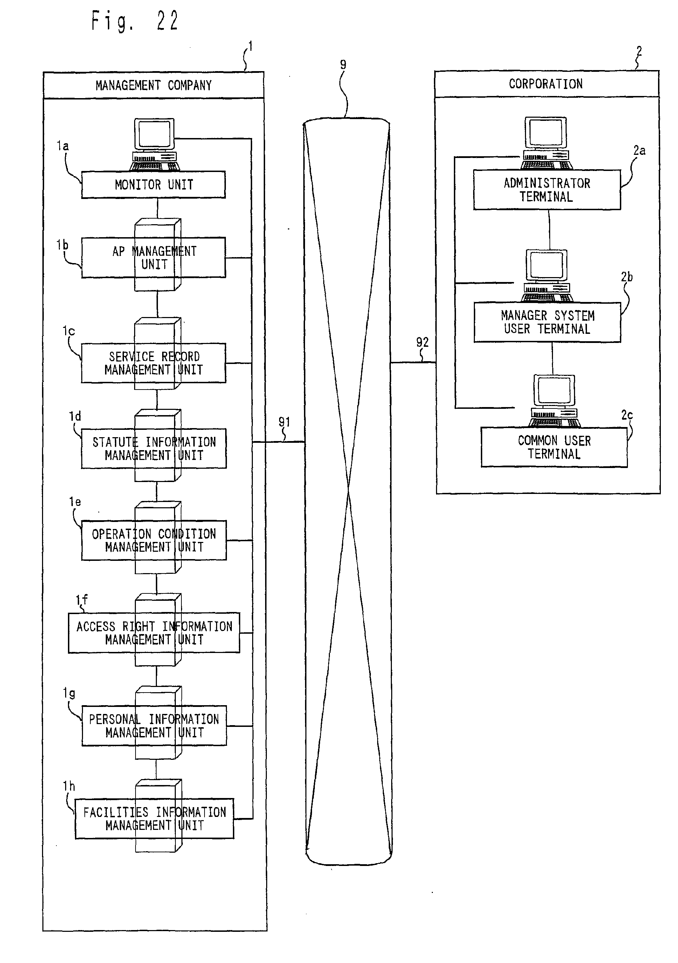

Figure 22 shows the outline of the configuration of the information system of the management company and the corporation according to the second embodiment in which the present invention is applied to the management service business of the qualification information about a corporation. In the first embodiment, the information system of the corporation 2 comprises the personal information management unit 2d, the facilities information management unit 2e, and the operation condition management unit 2f. In the second embodiment, the information system of the management company 1 (management system) has these management functions.

That is, as shown in Figure 22, the management system of the management company 1 comprises a personal information management unit 1g and a facilities information management unit 1h in addition to the monitor unit 1a, the AP management unit 1b, the service record management unit 1c, the statute information management unit 1d, the operation condition management unit 1e, and the access right information management unit 1f. The information system of the corporation 2 comprises only the administrator terminal 2a, the manager system user terminal 2b, and the common user terminal 2c.

The outlines of the information network and the business flow of the service business according to the present embodiment are almost the same as those shown in Figures 1 and 2. The present embodiment is different from the first embodiment in the operation condition management unit 1e, the personal information management unit 1g, and the facilities information management unit 1h provided for the management system. Otherwise, the configuration is the same as that according to the first embodiment. Therefore, the detailed explanation is omitted here.

The operation condition management unit 1e shown in Figure 22 is the portion for managing the operation conditions and management conditions of the management company 1 and the corporation 2 for providing a service. The personal information management unit 1g is the portion for managing the personal information (the basic personal information and the personal information relating to qualifications, etc.) about the corporation 2. The facilities information management unit 1h is the portion for managing the information about the facilities of the corporation 2.

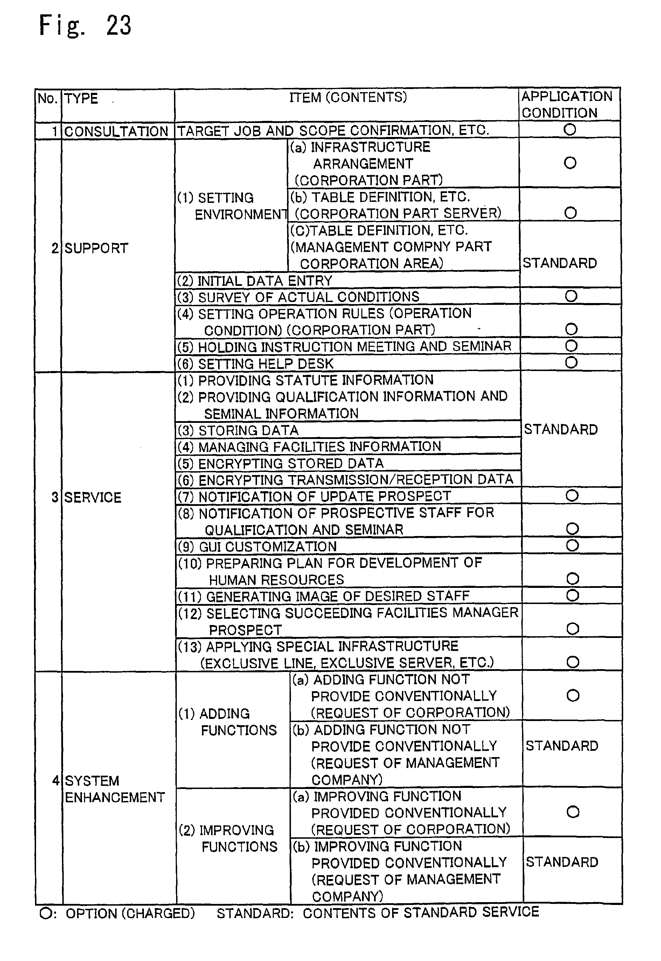

Figure 23 shows the detailed contents of the management service according to the present embodiment. According to the present embodiment, the management system of the management company 1 has the function of managing the personal information, facilities information, and operation conditions of the corporation 2. Therefore, the three items, that is, the data storage, the management of facilities information, and the encryption of the stored data, are included in the contents of the standard services. In Figure 4, the initial data entry (part of support) and the encryption of transmission/reception data (part of service) which are options in Figure 4 are included in the contents of the standard services.

In the initial data entry, the management company 1 enters the personal information about the corporation 2, the information about the facilities of the corporation 2, the information about the operation conditions and management conditions of the management company 1 and the corporation 2 as the initial data in the personal information management unit 1g, the facilities information management unit 1h, and the operation condition management unit 1e respectively.

In the data storage, the management company 1 stores the personal information about the corporation 2 in the personal information management unit 1g, the information about the facilities of the corporation 2 in the facilities information management unit 1h, and the information about the operation conditions and the management conditions of the management company 1 and the corporation 2 in the operation condition management unit 1e. In the management of the facilities information, the management company 1 manages the information about the facilities of the corporation 2 through the facilities information management unit 1h. In the encryption of the stored data, the management company 1 encrypts the corporation information (stored data) stored in the personal information management unit 1g, the facilities information management unit 1h, and the operation condition management unit 1e.

Thus, by encrypting the stored data, the management company 1 protects the corporation information stored in the personal information management unit 1g, the facilities information management unit 1h, and the operation condition management unit 1e against the leakage by malicious users such as hackers, crackers, etc. (hereinafter referred to as hackers, etc.).

In the encryption of transmission/reception data, the management company 1 encrypts various data (data transmitted/received through the network 9) including the qualification relevant information provided from the management company 1 to the corporation 2. Thus, the corporation information can be protected against the leakage by malicious users such as hackers, etc. although they try to illegally tap the data (information) transmitted through the network 9. However, encryption is not always necessary, for example if the network 9 is a LAN (local area network) or a WAN (wide area network) that cannot be accessed by a user with a malicious intent such as a hacker.

Furthermore, according to the present embodiment, the difference in configuration of the management system makes the method of providing information from the management company 1 to the corporation 2 different from the method according to the first embodiment. Described below is the method of providing the qualification relevant information according to the present embodiment. According to the present embodiment, the basic procedure is almost the same as (a) to (h) described above in the first embodiment.

The procedures are different between the first and second embodiments in (g) and (h). Other procedures of the second embodiment are the same as those of the first embodiment. Therefore, the detailed explanation is omitted here. According to the first embodiment, the information system of the corporation 2 which requests a service executes the AP (application program). On the other hand, according to the second embodiment, the AP is executed by the information system of the management company 1, and the result is transmitted to (provided for) the terminal of the user who has requested the service through the network 9.

That is, in the procedure (g), the AP management unit 1b of the management system inputs the request condition input by the user on the terminals 2a to 2c through the network 9, and extracts the necessary statute information and operation conditions, etc. from the statute information management unit 1d and the operation condition management unit 1e respectively. Furthermore, the AP management unit 1b extracts the qualification relevant information corresponding to the request condition from the personal information management unit 1g, the facilities information management unit 1h, and the operation condition management unit 1e based on the extracted statute information, operation conditions, etc. using the AP.

Then, in the procedure (h), the AP management unit 1b transmits the extracted qualification relevant information to the terminals 2a to 2c of the user who has requested the service through the network 9. Thus, the user can visually confirm the qualification relevant information corresponding to the request condition on the screens of the terminals 2a to 2c.

According to the present embodiment, as in the first embodiment, the administrator and the manager system user can easily and quickly change the facilities managers in the corporation 2, and also can reserve and maintain facilities managers and necessary staffs required in managing the operation of the corporation as planned.

Described below is the third embodiment in which the present invention is applied to the management service business for the qualification information about a corporation. The information system configurations of the management company and the corporation according to the third embodiment are the same as the configuration of the first embodiment shown in Figure 3. However, in the present embodiment, as in the second embodiment, the AP (application program) is executed in the information system of the management company unlike the first embodiment.

According to the present embodiment, the AP management unit 1b of the management system inputs the request condition input by the user on the terminals 2a to 2c through the network 9, and extracts the necessary statute information, operation conditions, etc. from the statute information management unit 1d and the operation condition management unit 1e. The AP management unit 1b executes the AP on the information system of the management company 1, extracts the qualification information, etc. corresponding to the request condition from the personal information management unit 2d, the facilities information management unit 2e, and the operation condition management unit 2f of the corporation 2 according to the extracted information, etc., and displays the extracted qualification information, etc. on the terminals 2a to 2c of the user who has requested the service.

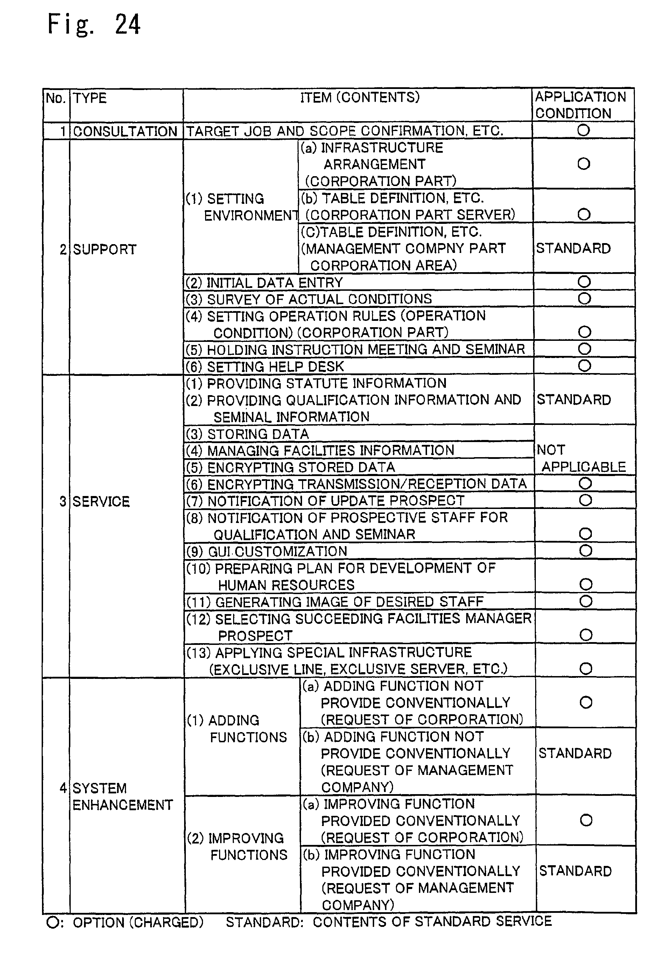

According to the present embodiment, as in the second embodiment, confidential information flows through the network 9. To perform this process, the detailed contents of the management service according to the present embodiment are shown in Figure 24. In Figure 24, the encryption of transmission/reception data which is an option in the first embodiment is a standard item as in the second embodiment. Otherwise, the configurations and the information processing procedures are the same as in the first and second embodiments. Therefore, the detailed explanation is omitted here. However, encryption is not always necessary, for example if the network 9 is a LAN (local area network) or a WAN (wide area network) that cannot be accessed by a user with a malicious intent such as a hacker.

According to the present embodiment, as in the first and second embodiments, the administrator and the manager system user can easily and quickly change the facilities managers in the corporation 2, and can also reserve and maintain facilities managers and necessary staffs required in managing the operation of the corporation as planned.

We will now explain the case where the present invention is applied to obtaining and efficiently maintaining an ISO 9000 series certification, which is the International Standards for quality management systems, and which has become indispensable for operating business. In the training record management section of the 1994 ISO 9000 series, there were rules on individual training history management, training object management, etc. In comparison, the ISO 9000 series issued on 2000 further includes rules on managing the abilities (skills) that are indispensable upon performing certain tasks.

The following explains a fourth embodiment in which the present invention is applied to the qualification information management service business of a corporation. The present embodiment aims at deliberately training and acquiring the necessary human resource for obtaining and maintaining the ISO 9000 series certification related to quality management system.

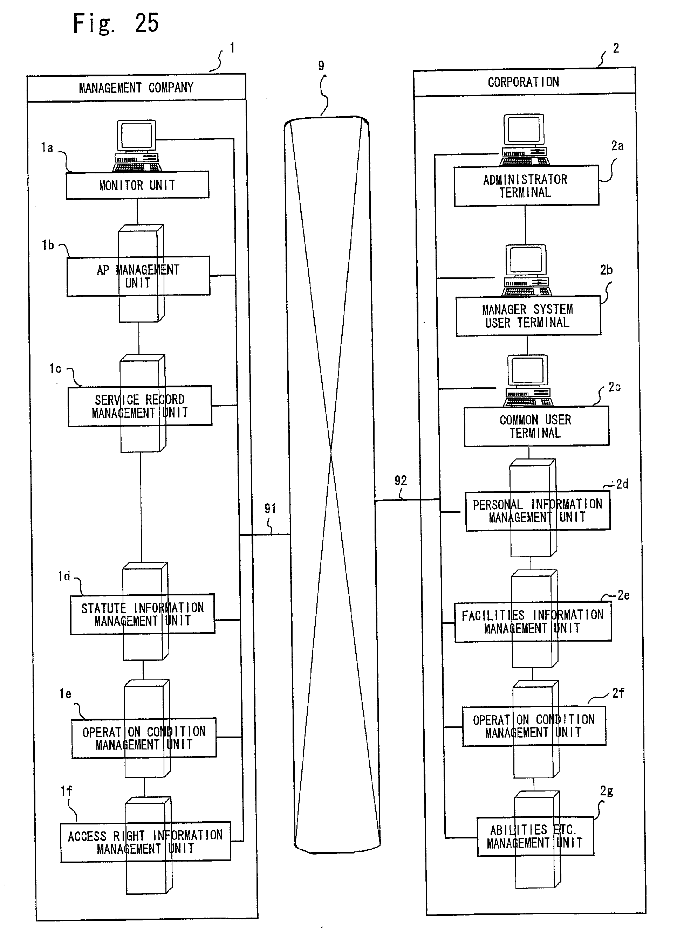

Figure 25 shows the outline of the information system configuration of the management company 1 and the corporation 2 according to the present embodiment. The difference between the present embodiment and embodiment 1 is that according to the present embodiment, not only the employees of corporation 2 but also all the other parties involved in maintaining the quality system are managed of their qualifications and training records. That is, in order for corporation 2 to obtain and maintain the ISO 9000 series certification, the corporation must also manage the employees (hereinafter called affiliated company staffs) of affiliated companies and partner companies (hereinafter called affiliated companies) that relate to maintaining the quality system. The management of the affiliated company staffs is determined based on the dispatch contract between corporation 2 and the affiliated company. For example, the corporation 3 of FIG. 1 canbe the affiliated company.

The differences between FIG. 25 and FIG. 3 are that an abilities etc. management unit 2g is added to corporation 2, and that employees of affiliated corporation 3 (affiliated company staffs) are registered in the personal information management unit 2d. The abilities etc. management unit 2g is the unit for managing the abilities that are required to perform the task, and similar to other management units 2d to 2f, it includes computers performing the respective functions either actually or virtually. The computers functioning as terminals 2a to 2c and management units 2d to 2g are connected to the network 9 through information communication lines 92. The information managed by each management unit 2d to 2g of the information system for the corporation 2 can be managed by a single database.

We will now explain the points that differ from embodiment 1 in the management service contents of Figure 4 by registering the affiliated company staffs in the abilities etc. management unit 2g and the personal information management unit 2d. According to the support shown in Figure 4, the management company 1 was to set the environment of the personal information management unit 2d, the facilities information management unit 2e, and the operation condition management unit 2f of the corporate-part table of the corporation 2. In addition, according to the present embodiment, the management company 1 must also set the abilities etc. management unit 2g.

According to initial data registration, the personal information of the employees of corporation 2 and the affiliated company staffs are registered in the personal information management unit 2d, the data related to the facilities of the corporation 2 is registered in the facilities information management unit 2e, and the information indicating the operating condition and the management condition of the corporation are registered in the operation condition management unit 2f, respectively. In addition to the items registered according to the first embodiment, the personal information management unit 2d stores the information related to the original company of the dispatched employee (the affiliated company) such as the name of the company, the department from which the employee has been dispatched, the original job title, etc. The management company 1 registers the above-mentioned information on behalf of the company, and performs support services. Moreover, according to the present embodiment, the information indicating the required ability for performing the task is registered to the abilities etc. management unit 2g.

Further, upon formulating the portrait of human resources to be employed, the management company 1 obtains information on the currently lacking human resources (such as qualified personnel) based on the information stored in the personal information management unit 2d and the abilities etc. management unit 2g, and provides the information related to the required human resources to the corporation 2.

According to the present embodiment, the basic procedures related to requesting and providing the qualification related information are similar to the procedures (a) to (h) that appear in the detailed description of embodiment 1. The procedures of the present embodiment that differ from embodiment 1 are procedures (g) and (h) . These procedures are explained in the following.

In procedure (g), the AP management unit 1b of the management system inputs the request condition that the user of terminals 2a to 2c input through the network 9, and extracts the necessary statute information, operation conditions, etc. The necessary statute information is extracted from the statute information management unit 1d, and the necessary operation conditions etc. are extracted from the operation condition management unit 1e. The request condition functions as the criteria for searching these information.

The AP management unit 1b transmits the extracted information and the corresponding AP (application program) through the network 9 to at least one of the user terminals 2a to 2c used to request the service, the personal information management unit 2d, the facilities information management unit 2e, the operation condition management unit 2f, or the abilities etc. management unit 2g.

In procedure (h), the transmitted AP utilizes the information stored in the personal information management unit 2d, the facilities information management unit 2e, the operation condition management unit 2f, and the abilities etc. management unit 2g so as to obtain (extract) the qualification information etc. corresponding to the request condition, and displays the extracted qualification information etc. on the display of the user terminal 2a to 2c used to request the service. In order to obtain the qualification information etc., the AP utilizes the statute information and the operation conditions etc. extracted by procedure (g).

The following explains the actual steps for the user (the employees of corporation 2 or the affiliated company staffs) to obtain the qualification-related information from the management system of the management company 1. The explanations on steps that are the same as embodiment 1 are omitted.

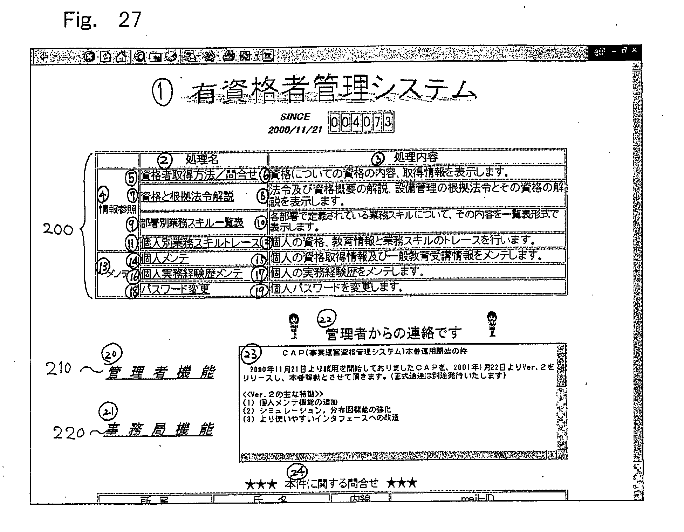

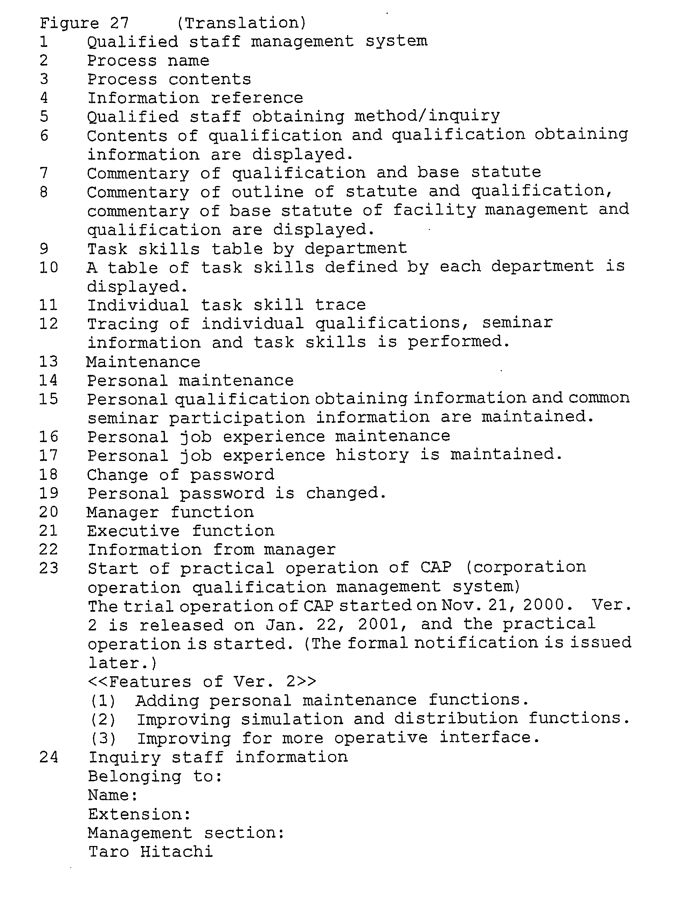

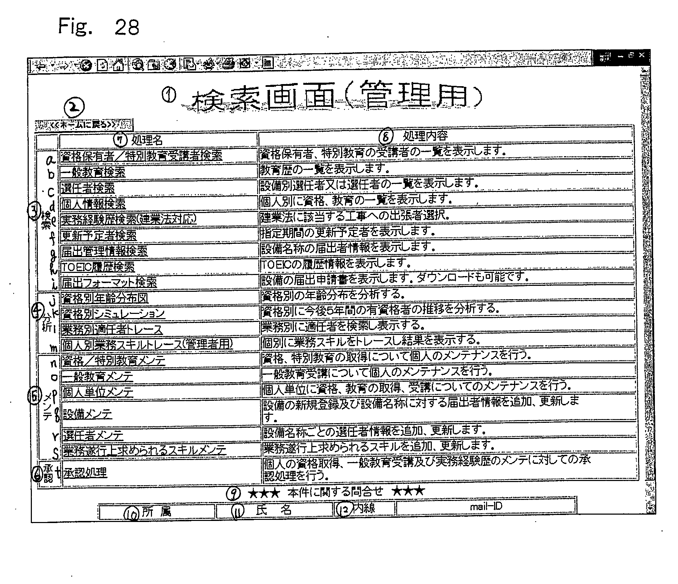

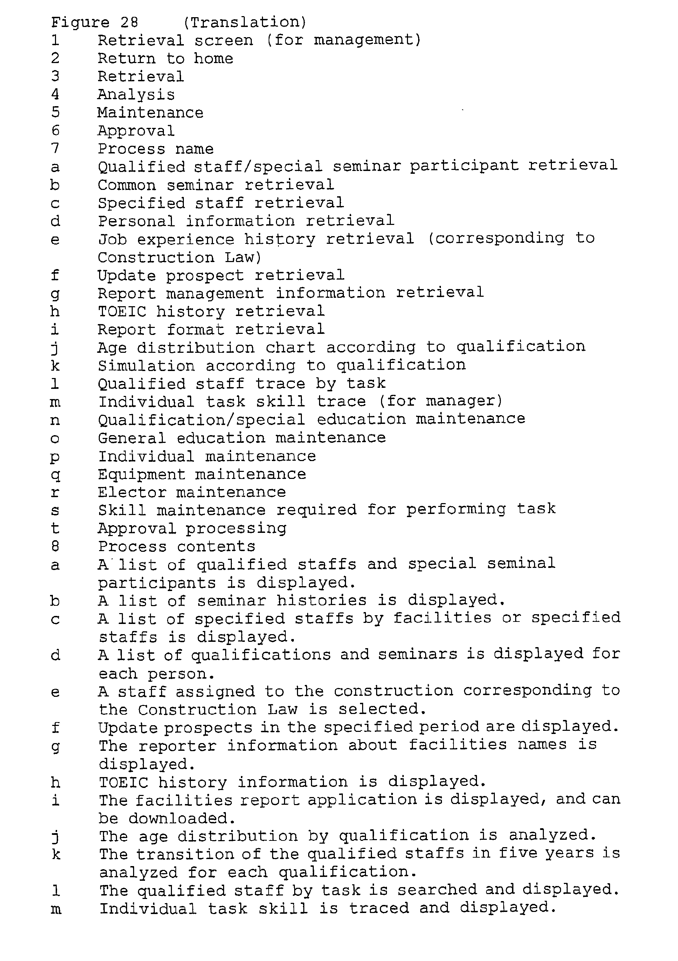

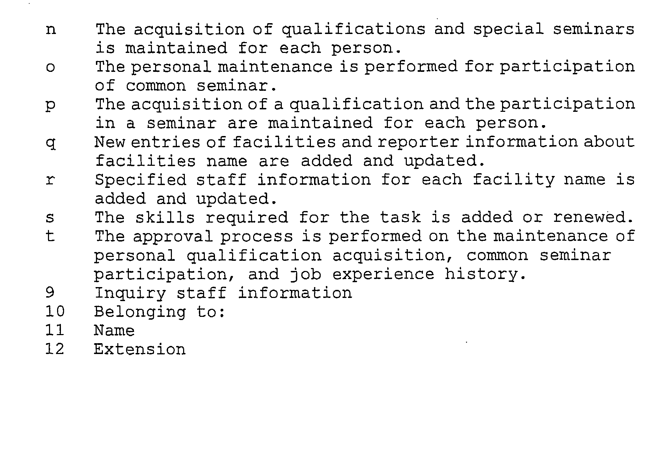

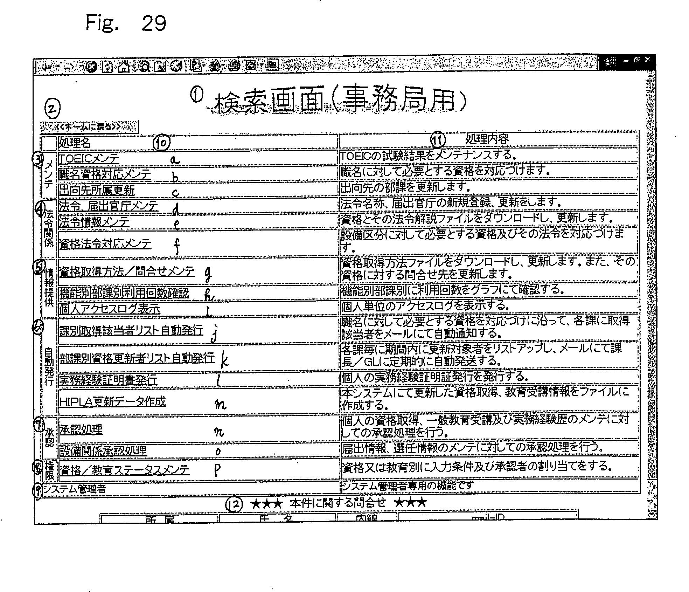

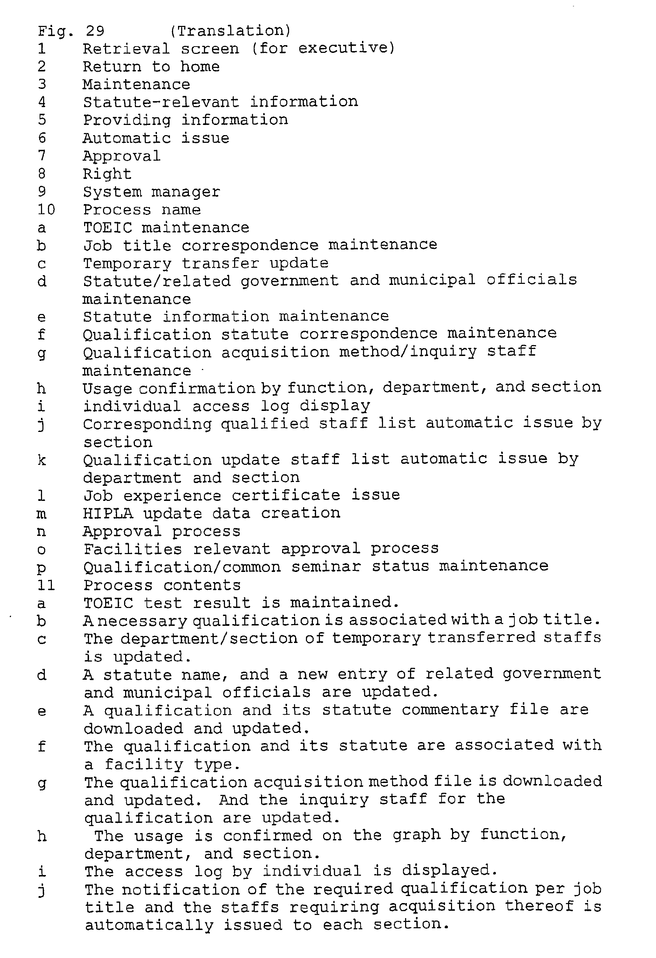

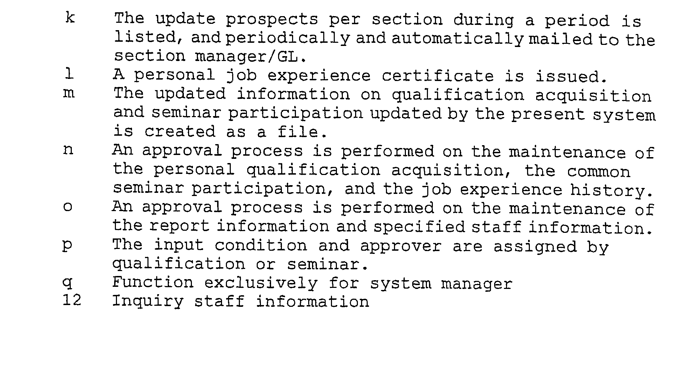

At first, the user enters the user ID and the password from the login screen of Figure 5 in order to display the common menu screen of Figure 27. The common menu screen displays the common user function 200 showing the menu that can be used by a common user, the manager function 210 showing the menu for a manager, and the executive function 220 showing the menu for an administrator are displayed together. Furthermore, at the bottom of Figure 27, inquiry information is displayed as in Figures 28 and 29.

A common user can use only the common user function 200. A manager system user can use the common user function 200 and the manager function 210. An administrator can use all of the common user function 200, the manager function 210, and the executive function 220.

The scope of view (retrieval) of qualification information and training information by the employee of corporation 2 is restricted as follows. The common user can view only the information on himself/herself. The manager system user can view the information on himself/herself, and all of his or her staffs including the employees of corporation 2 and the affiliated company staffs. The administrator can view the information of the entire employees of corporation 2 and the affiliated company staffs. The affiliated company staff can only view information on himself/herself. Further, it is possible to provide manager system user authority or administrator authority to an affiliated company staff based on special authority.

The common user function 200 has two menus, that is, an information reference menu and a maintenance menu. The information reference menu has four processing menus, that is, 'qualified staff acquisition method/inquiry', 'qualification and base statute commentary', 'task skills table for each department', and 'individual task skill trace'.

If the 'task skills table for each department' is selected on the common menu screen, the contents related to the abilities required for performing the task defined in each department is displayed in table format on the screen of the user terminal. If 'individual task skill trace' is selected, the qualifications and the training that back up the abilities that are required to perform a certain task, and the result on whether a person fulfills the condition or not are displayed on the terminal screen of the user.

If the 'personal maintenance' is selected, the screen showing the qualifications acquired by an individual, the optional and required qualification information set as target of acquisition, and the maintenance execution menu is displayed on the terminal of the user. The other processes in the common user function 200 of Figure 27 are the same as in embodiment 1, so detailed description thereof are omitted.

The manager system user and the administrator can display the management menu screen (retrieval screen) shown in Figure 28 on the terminal by selecting the manager function 210 on the common menu screen shown in Figure 27. The management menu screen has four menus, that is, retrieval, analysis, maintenance, and approval.

The processes of the retrieval and approval are the same as embodiment 1, so detailed explanation thereof are omitted. As for analysis, in addition to the processes of embodiment 1, a qualified personnel trace per task and an individual task skill trace (for manager) are added. As for maintenance, a skill maintenance required for performing the task is added to the processes of embodiment 1.

If 'qualified staff/special seminar participant retrieval' is selected on the management menu screen, then a list of qualified staffs and a list of the qualification information determined as the arbitrary or required target of acquisition are displayed on the terminal screen of the user. If 'common seminar retrieval' is selected, then a list of seminar histories and a list of seminar information determined as the arbitrary or required target of participation are displayed on the terminal screen of the user. If 'personal information retrieval' is selected, then a list of personal qualifications and a list of qualification information being set as the arbitrary or required target of acquisition are displayed on the terminal screen of the user.

If 'age distribution chart by qualification' is selected, an age distribution chart of qualified staffs per qualification and the qualification information being set as the arbitrary or required target of acquisition are displayed on the terminal screen of the user. If the 'qualified staff trace per task' is selected, a screen for searching and displaying the most qualified person having the abilities to perform a certain task is displayed on the terminal screen of the user. If the 'individual task skill trace (for manager)' is selected, a screen for searching the task matching the individual based on the abilities required for performing a task is displayed on the terminal screen of the user.

If 'qualification/special seminar maintenance' is selected, then a screen for performing maintenance of qualified staffs and qualification information on arbitrary or required target of acquisition is displayed on the terminal of the user. If 'common seminar maintenance' is selected, then a screen for performing maintenance of participants of each common seminar and participation information on arbitrary or required target of acquisition is displayed on the terminal of the user. When 'individual maintenance' is selected, then a screen for performing maintenance of acquired qualification, common seminar participation, and arbitrary or required target of acquisition thereof are displayed on the terminal of the user. The qualification information/seminar information set as arbitrary or required target of acquisition by the manager cannot be changed by the common user.

If 'approval process' is selected, then a screen for an approval process related to the qualification acquisition, common seminar participation, and arbitrary or required target of acquisition thereof maintained by each employee is displayed on the screen of the user. The other processes on the managing menu screen of Figure 28 are the same as those in embodiment 1, so explanations thereof are omitted.

When the administrator selects the executive function 220 on the common menu screen shown in Figure 27, an executive menu screen (retrieval screen) shown in Figure 29 can be displayed on the terminal. The executive menu screen has seven menus, that is, maintenance, statute related information, providing of information, automatic issue, approval, rights, and system manager. However, 'system manager' is a menu available only to a system manager among administrators.

Maintenance has three processing menus, which are, 'TOEIC maintenance', 'job title-qualification correspondence maintenance', and 'temporary transfer affiliation update. Information providing has three processing menus, which are, 'qualification acquisition method/inquiry staff maintenance', 'usage confirmation by function, department, and section', and 'individual access log display'. Automatic issue has four processing menus, which are, 'corresponding qualified staff list automatic issue by section', 'qualification update staff list automatic issue by department and section', 'job experience certificate issue', and 'HIPLA renewal data creation'.

System manager has fifteen processing menus, which are, 'special authorized personnel maintenance', 'non-approval work experience maintenance', 'qualification/seminar name maintenance', 'communication update', 'password maintenance', 'qualification/seminar non-approval maintenance', 'qualification/seminar information non-approval condition delete', 'facility delete', 'personal information data export', 'personal information data import', 'affiliated company registration', 'employment affiliation update', 'temporal employment division update', 'function name update', and 'automatic mail manager update' (not shown). The processes related to statutes, approval, and authorization are the same as those of embodiment 1, so detailed explanations thereof are omitted.

If 'temporal employment division update' is selected on the executive menu screen, then a screen for updating one's division at the company of temporal employment is displayed on the terminal of the user. When 'personal access log display' is selected, the number of access this month, the number of access last month, the total number of access, the initial access date, and the recent access date are displayed on the terminal of the user. When 'HIPLA update data creation' is selected, a screen for creating the file for providing the renewal information to the HIPLA (human resources management system) is displayed on the terminal of the user.

If 'approval process' is selected, a screen for performing approval process for the maintenance of personal qualification acquisition, common seminar participation, qualification information/seminar information on arbitrary or required target of acquisition, and work experience history is displayed on the terminal of the user.

If 'qualification/seminar non-approval maintenance' is selected, a screen enabling maintenance of acquisition of qualification/special seminar and common seminar without approval is displayed on the terminal of the user. If 'personal information data export' is selected, a screen for outputting to a file the information on the personal qualification, training, and work experience history is displayed on the terminal of the user. If 'personal information data import' is selected, a screen for importing the file output by the personal information export process or a file having the format similar thereto, and registering the imported data to a table is displayed on the terminal of the user.

If 'affiliated company registration' is selected, a screen for registering the affiliated company is displayed on the terminal of the user. If 'employment affiliation renewal' is selected, a screen for registering and renewing the employment affiliation is displayed on the terminal of the user. If 'temporal employment division update' is selected, a screen for updating the division at the company of temporal employment is displayed on the terminal of the user. If 'function name update' is selected, a screen for adding/renewing functions is displayed on the terminal of the user. If 'automatic mail manager update' is selected, a screen for renewing the mail issuance manager is displayed on the terminal of the user.

The other processes on the executive menu screen of Figure 29 are the same as those in embodiment 1, so explanations thereof are omitted.

The following explains one practical example of the user terminal screen for several processing menus of Figures 27 to 29.

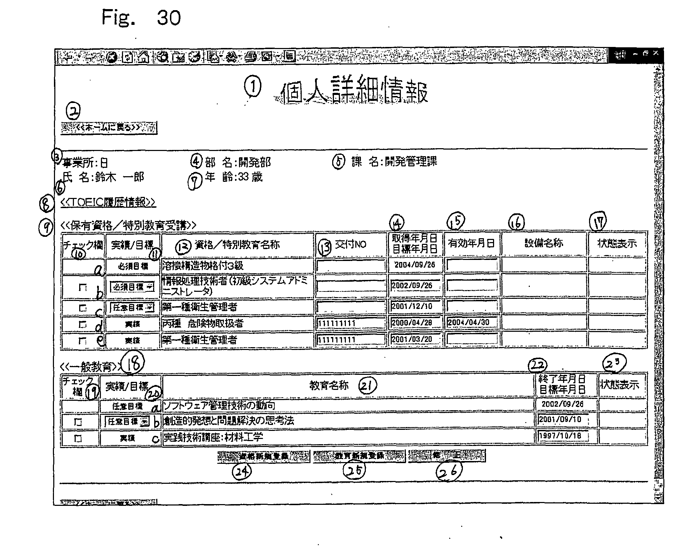

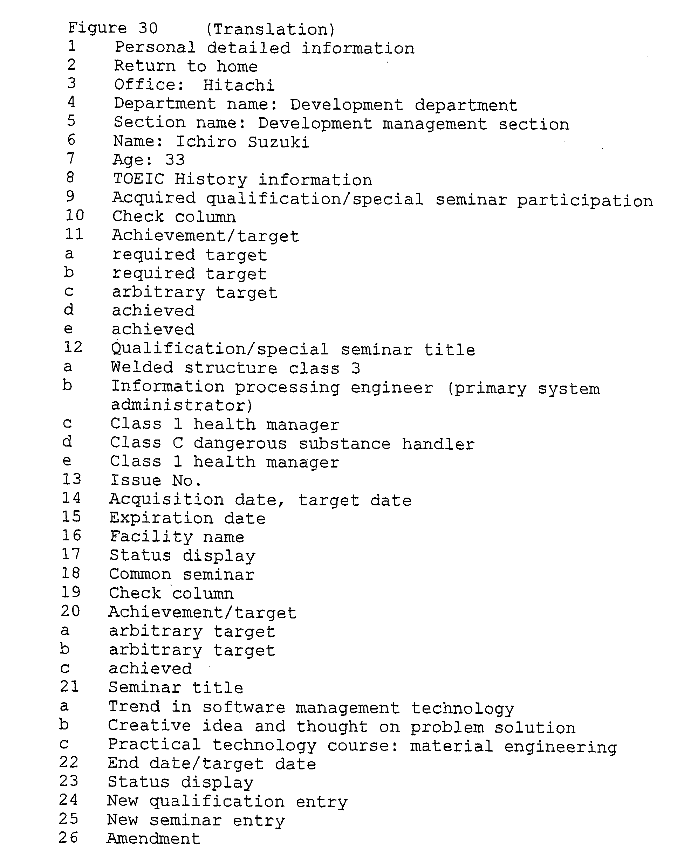

If the user selects 'personal maintenance' on the common menu screen of Figure 27, the screen of Figure 30 is displayed. For example, if the user is 'Ichiro Suzuki', it is displayed on the screen as personal information shown in Figure 30 the department to which the user belongs, the name and age of the user accompanied by the acquired qualifications, information on mastered special seminars and common education, and information on qualifications, special and common seminars set as the arbitrary or required target of acquisition by himself or by a supervisor.

The user can press the new qualification entry button or the new seminar entry button on the screen shown in Figure 30 so as to register a newly acquired qualification, a newly participated seminar, or a newly set target of acquisition. In addition, the user can press the amendment button on the screen shown in Figure 30 so as to amend the information on the qualification or the seminar displayed on the screen. Thus, Figure 30 is a personal information maintenance screen and personal detailed information screen.

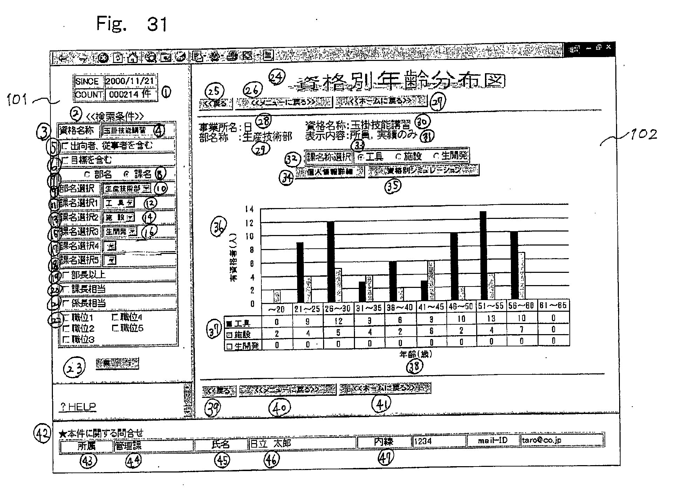

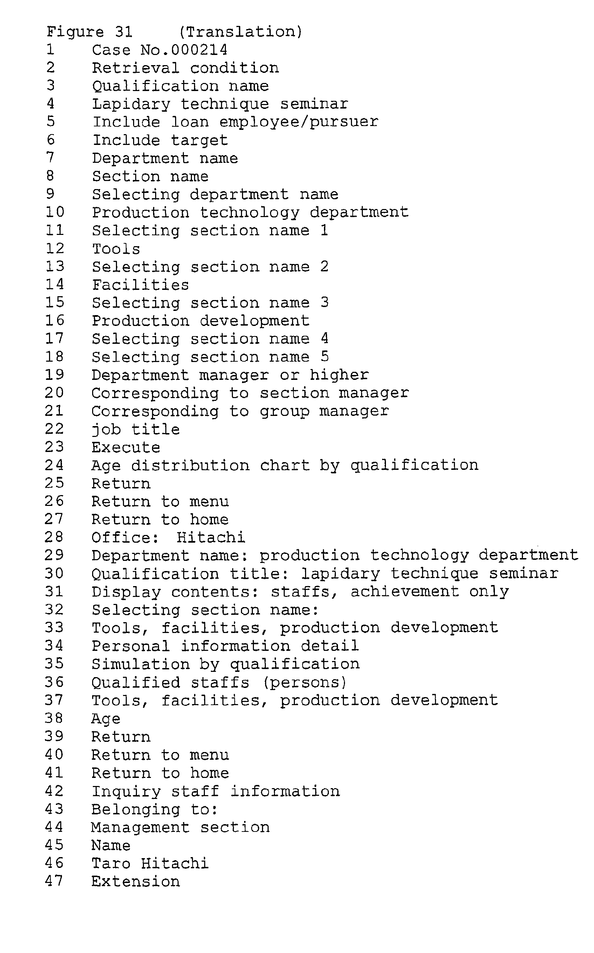

If the user selects 'age distribution chart by qualification' on the management menu screen shown in Figure 28, the left columns shown in Figure 31 are displayed on the screen. In the left top column (condition input unit 101), six retrieval conditions, which are, qualification title, whether to include loan employees/pursuers, whether to include target, the department name or section name, and job type are displayed. The user presses the execution button after entering either at least the department name or the section name and the qualification title in the six retrieval conditions.

For example, in the condition input unit 101 shown in Figure 31, if 'lapidary technique seminar' is input in the qualification title, 'production technology department' is selected in the column of selecting a department name, 'tools', 'facilities', and 'production development' are selected in the column of selecting a section name, before the execution button is pressed, then the entire screen shown in Figure 31 is displayed. In the right columns of Figure 31 (information display unit 102), a bar graph indicating the age distribution of qualified persons having the input qualification is displayed for each section (group to which a staff belongs) in the selected department.

If in the condition input unit 101 of Figure 31 checkmarks are input to the items 'include loan employee/pursuer' and 'include target', a bar graph including the number of corresponding persons is displayed. If in Figure 31 the 'tool' in the information display unit 102 is selected and the personal detailed information button is pressed, the information such as the names of persons belonging to the bar graph will be displayed.

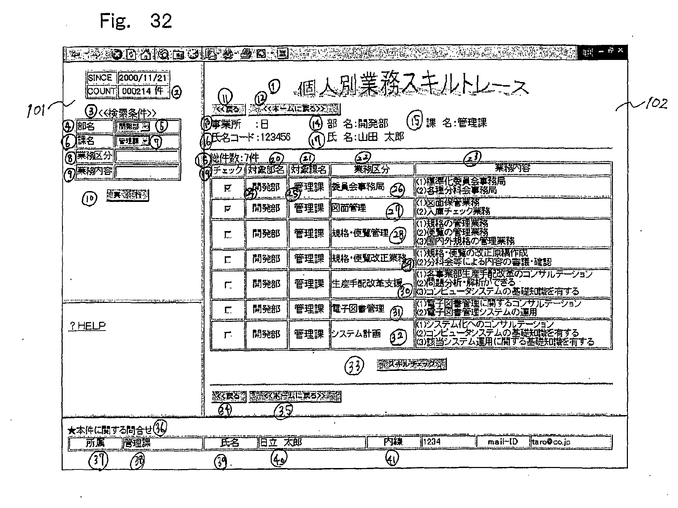

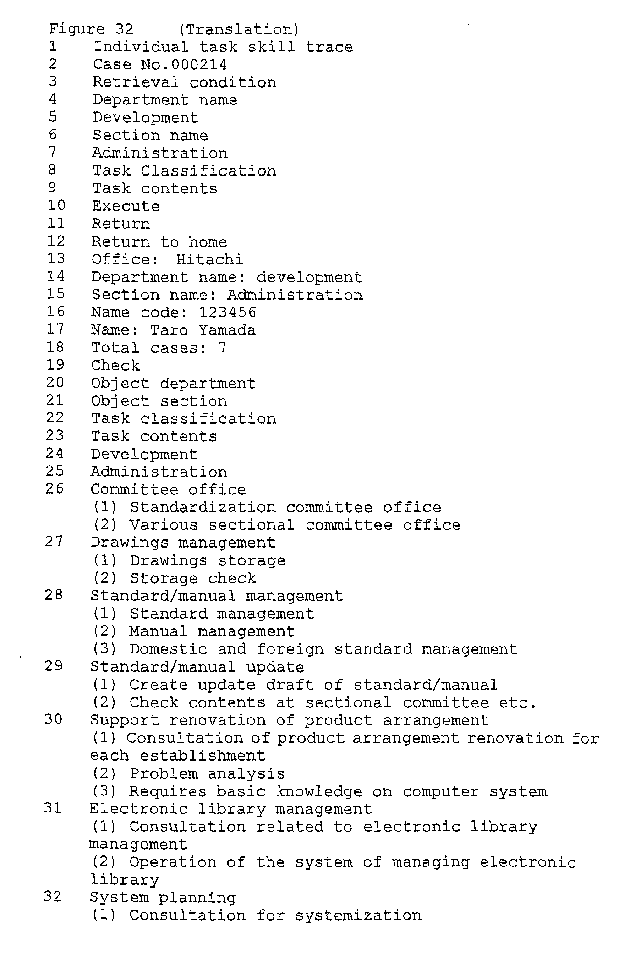

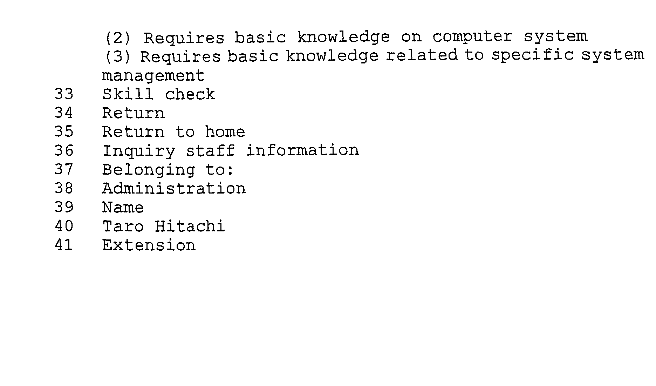

If the user selects 'individual task skill trace' on the common menu screen of Figure 27, the left columns shown in Figure 32 will be displayed. The upper left column (condition input unit 101) displays four retrieval conditions, which are, the department name, section name, task classification, and task contents. The user either inputs none of or at least one of the four retrieval conditions before pressing the execution button.

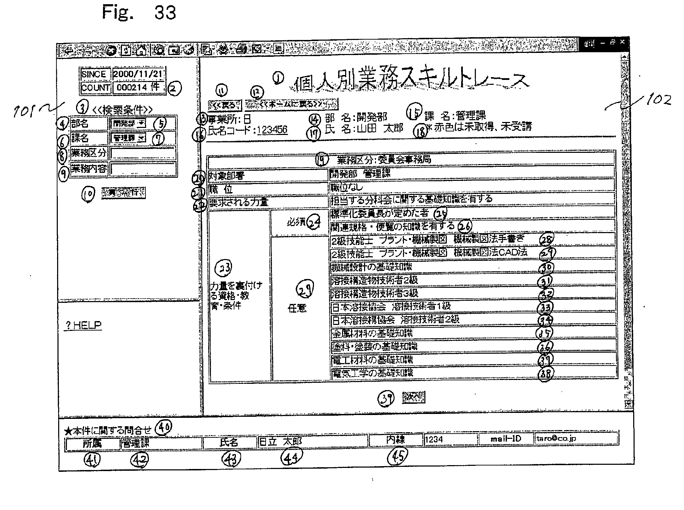

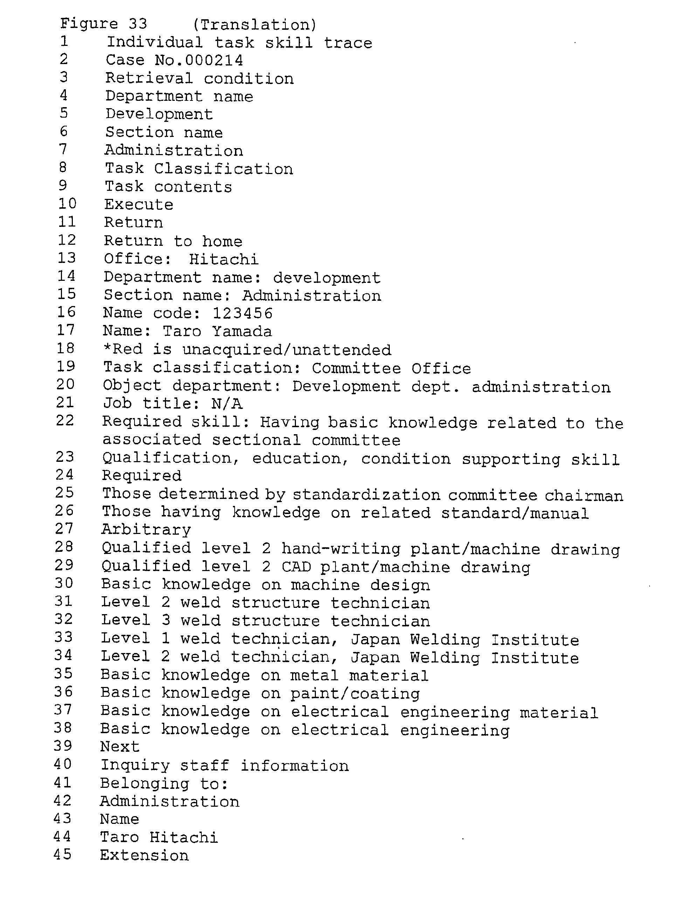

For example, when the user inputs 'development' in the department name and 'administration' in the section name in the condition input unit 101 of Figure 32 and presses the execution button, the whole screen shown in Figure 32 is displayed. In the right columns of Figure 32 (information display unit 102), the tasks within the designated range of condition is displayed. Display items are the business establishment, department name, section name, name code, name, check boxes, object department name, object section name, task classification, and task contents. When check marks are provided in the check box before pressing a skill check button, the screen shown in Figure 33 is displayed.

Figure 33 shows the result of skill check related to the designated task classification qualifications/ seminars/conditions that the user has already acquired. Displayed are the business establishment, department name, section name, name code, name, task classification, object department name, object section name, job title, required skill, and qualifications/educations/ conditions (arbitrary and required) that support the skill of the individual. In this case, for example, the qualifications/ educations/ conditions that the person has already acquired upon performing his duty are shown in black, whereas those that have not been acquired are shown in red. Further, when the name code is clicked on the screen of Figure 33, the personal detailed information of Figure 30 can be displayed.

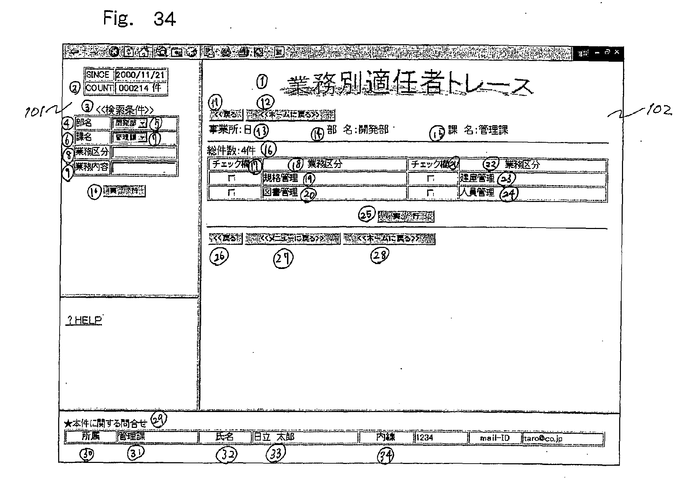

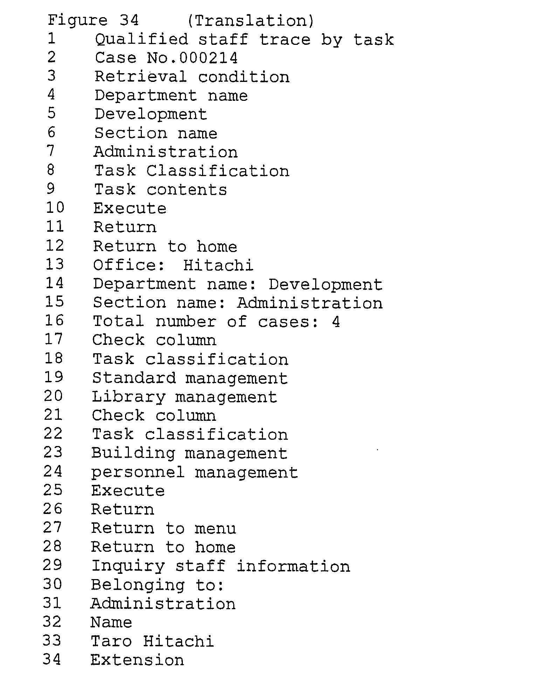

Even further, when the user selects 'qualified staff trace per task' on the managing menu screen of Figure 28, the left columns shown in Figure 34 are displayed on the screen. Four retrieval conditions are displayed on the upper left column (condition input unit 101), which are, the department name, section name, task classification, and task contents. The user either inputs none of or at least one of the four retrieval conditions before pressing the execution button.

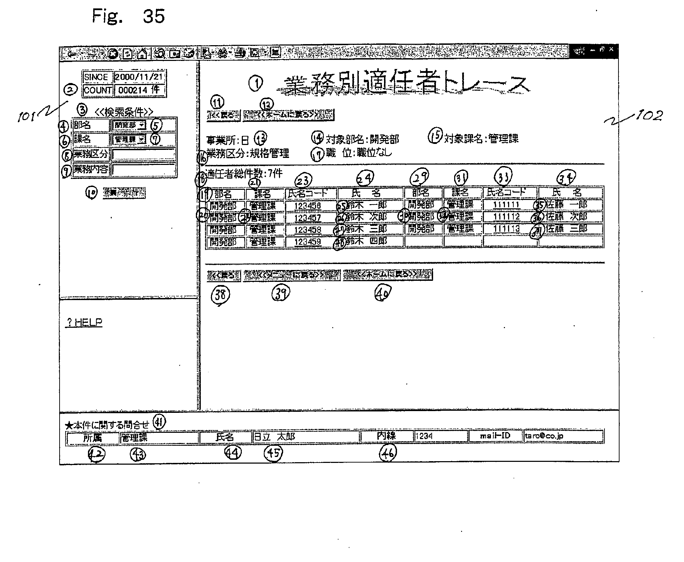

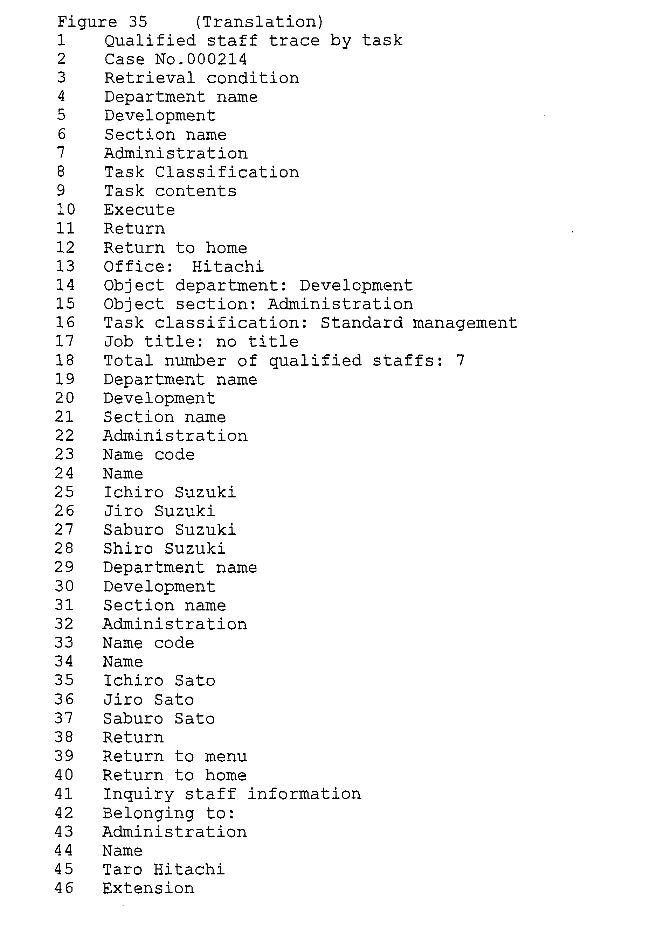

For example, when the user inputs 'development' in the department name column and 'administration' in the section name column in the condition input unit 101 of Figure 34 and presses the execution button, the whole screen shown in Figure 34 will be displayed. The display items are the business establishment, department name, section name, check boxes, and task classification. In the right columns of Figure 34 (information display unit 102) are displayed the table of tasks within the designated condition range. If the user wishes to confirm the qualified staff for a corresponding task, the user provides a check mark to the corresponding check box, and presses the execution button. For example, if the check box of 'standard administration' is marked in the information display unit 102 of Figure 34, then the screen of Figure 35 is displayed.

Figure 35 is a table showing the persons having required skills for performing the selected task (standard administration). The displayed items are the business establishment, subject department name, subject section name, task classification, job title, department name, section name, name code, and name. If name code is clicked on Figure 35, the screen of Figure 33 will be displayed.

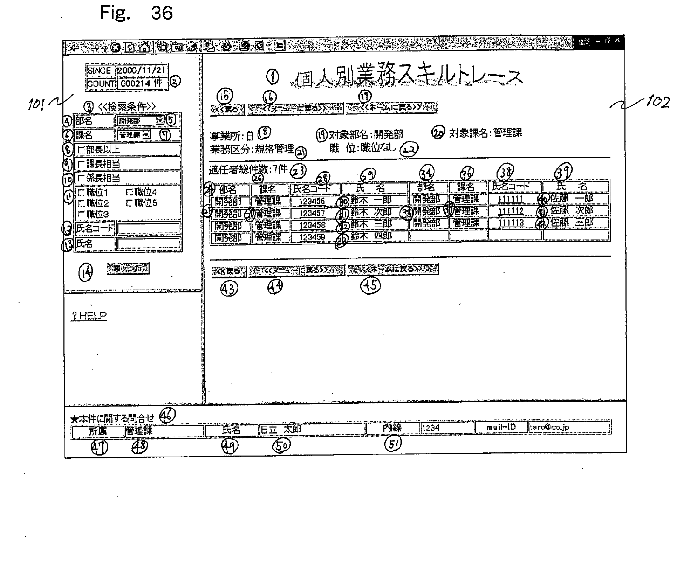

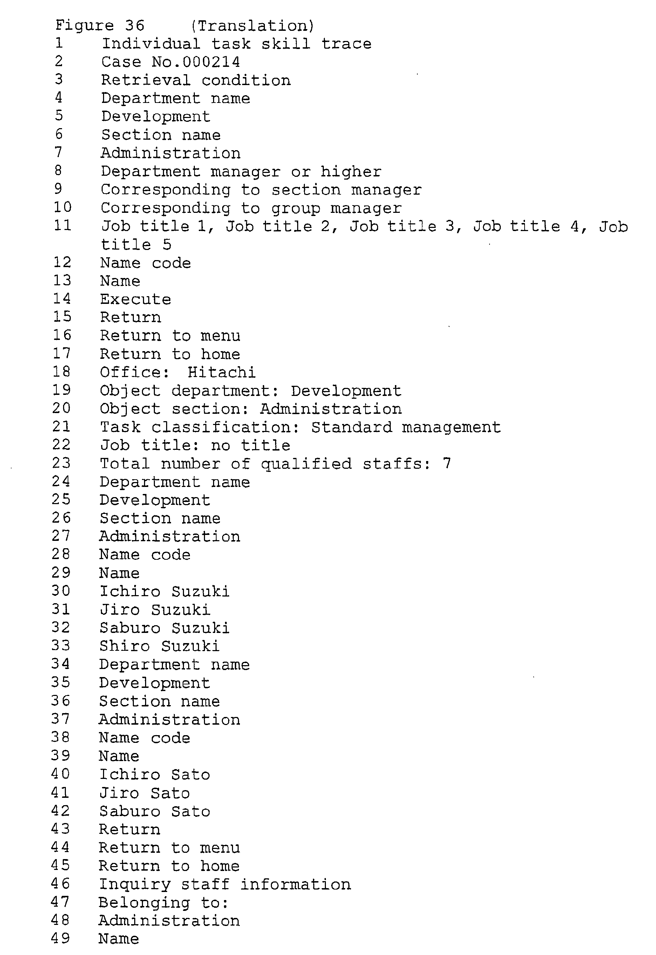

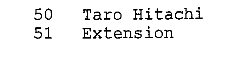

Further, if the user selects 'individual task skill trace (for manager)' on the manager menu screen of Figure 28, the left columns shown in Figure 36 will be displayed on the screen. Five retrieval conditions are displayed on the upper left column (condition input unit 101), which are, the department name, section name, job title, name code, and name. The user inputs either nothing (none of) or at least one of the five retrieval conditions before pressing the execution button.

For example, when the user inputs 'development' in the department name column and 'administration' in the section name column in the condition input unit 101 of Figure 36 before pressing the execution button, the whole screen of Figure 36 will be displayed. In the right column of Figure 36 (information display unit 102) is displayed a table of individuals having the skills required to perform the task within the designated range of conditions. The items displayed in Figure 36 are the business establishment, object department, object section, task classification, job title, department name, section name, name code, and name.

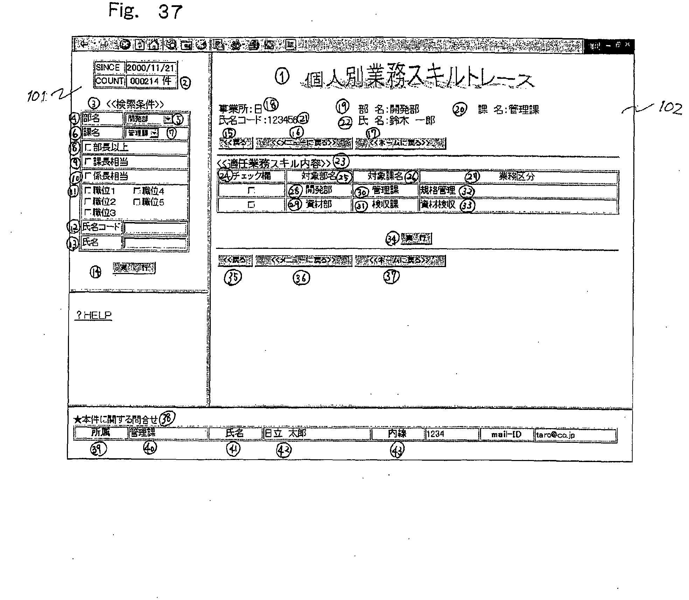

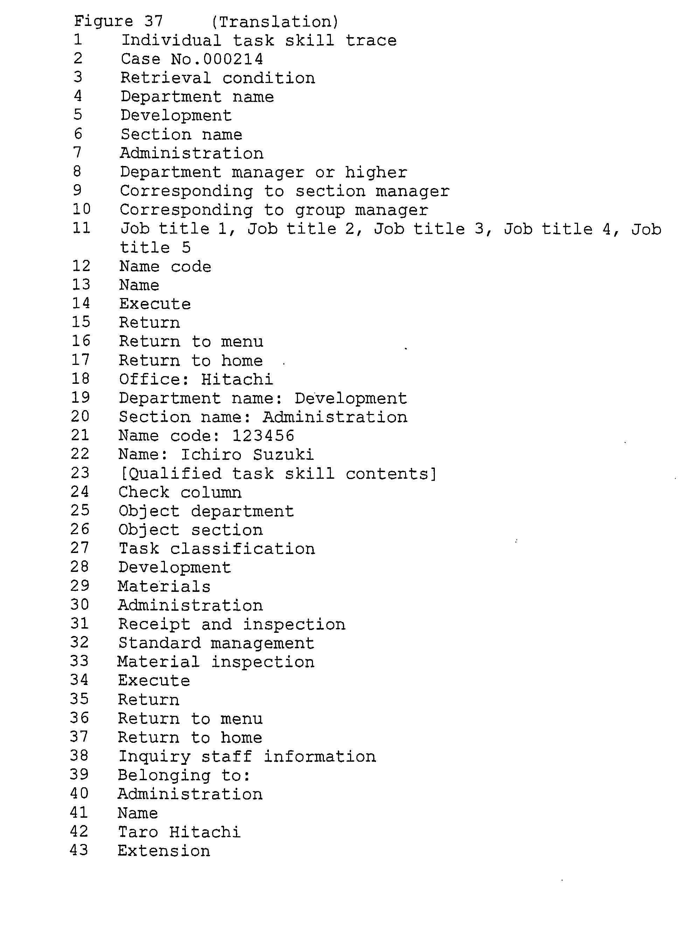

If the user clicks the name code [123456] in Figure 36, the screen of Figure 37 is displayed. Figure 37 is a table of tasks that a person has the required skills to perform. The items displayed in Figure 37 are the business establishment, department name, section name, name code, name, check boxes, object department and section of task, and task classification. If the user provides a check mark in the check boxes of Figure 37 and presses the execution button, the screen of Figure 33 is displayed.

According to the present embodiment, the employees of corporation 2 and the affiliated company staffs of corporation 3 are displayed in mixture, so in order to prevent confusion, the affiliated company staffs can be displayed in light blue to distinguish them from the employees of corporation 2.

According to the present embodiment, the administrator and themanager systemuser can easily and promptly perform any change in the facility manager of a corporation 2, and can secure and maintain necessary human resources required for managing facilities and running businesses in a corporation in a planned manner. As a result, the present invention enables to realize effective acquisition and maintenance of the ISO 9000 series certification which is becoming indispensable in running a business.

Next, a fifth embodiment applying the present invention to a qualification information management task business will be explained. The information system configuration of management company 1 and corporation 2 according to embodiment 5 is the same as Figure 25 of embodiment 4. However, according to the present embodiment, similar to the third embodiment, the execution of the AP (application program) is performed on the information system of the management company 1, which is different from embodiment 4.

In the present embodiment, the AP management unit 1b of the management system inputs through the network 9 the request condition that the user inputs through terminals 2a-2c, and extracts the necessary statute information, operation conditions, etc. from the statute information management unit 1d and operation condition management unit 1e. The AP management unit 1b executes the AP on the information systemof the management company 1, and based on the extracted information etc., extracts the qualification information and the like corresponding to the request condition from the personal information management unit 2d, the facilities information management unit 2e, the operation condition management unit 2f, and skills etc. management unit 2g, and displays the extracted qualification information etc. on the user terminals 2a-2c from which the task was requested.

According to the present embodiment, the administrator and the manager system user can easily and promptly change the facilities manager in a corporation 2, and can also secure and maintain necessary human resources required for managing facilities and running businesses in a corporation in a planned manner. As a result, the present invention enables to realize effective acquisition and maintenance of the ISO 9000 series certification which is becoming indispensable in running a business.

According to embodiments 4 and 5, the corporation 2 manages the information on the affiliated company staffs (employees) of corporation 3 based on a temporary employment contract. In this case, corporation 3 merely provides information, so corporation 3 cannot effectively manage the information related to the affiliated company staffs.

In order for corporation 3 to integrally manage the information on the affiliated company staffs dispatched to corporation 2 and information on other employees, it is possible as mentioned in embodiment 2 to request management of personal information to the management company 1, and to share the data in the personal information management unit 1g with corporation 2. According to such embodiment, corporation 2 can integrally manage the information on affiliated company staffs being dispatched from corporation 3 and the employees of corporation 2, and corporation 3 can manage information on the employees dispatched to corporation 2 and employees not dispatched to corporation 2, and the management can be performed corresponding to the organizational framework of the corporation. Moreover, by registering the dispatch source information in the personal information management unit 1g related to the affiliated company staffs dispatched to corporation 2, the corporation 3 can provide the information related to the dispatched company staffs to corporation 2.

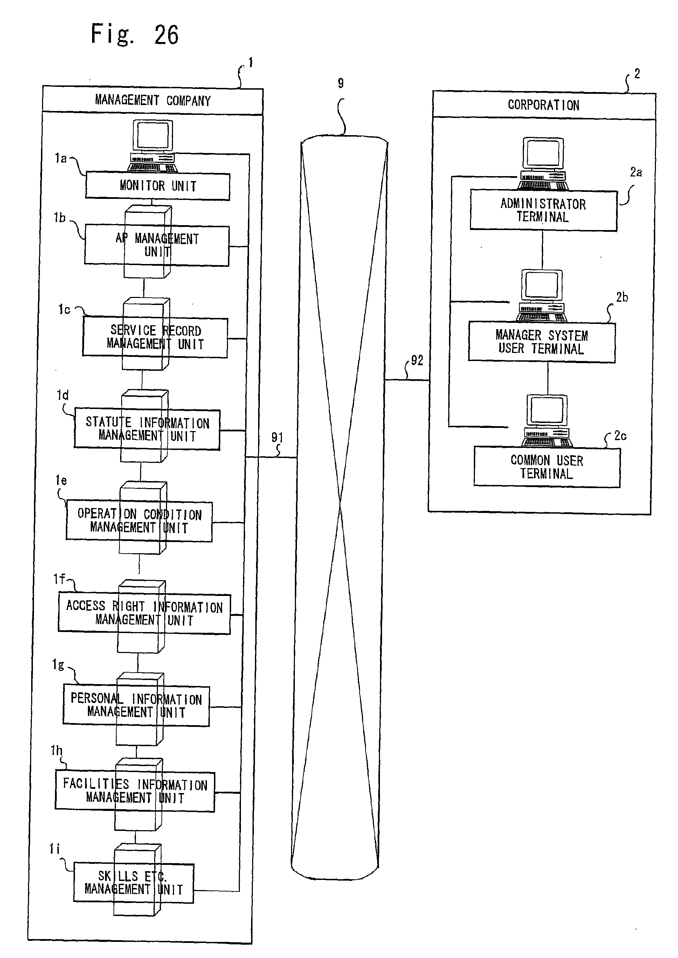

Embodiment 6 will now be explained where the present invention is applied to a management service business of qualification information in a company so as to realize the above-explained information management. Figure 26 shows the outline of the information system configuration of the management company 1 and corporation 2 of the present embodiment. The configuration of the present information system is basically identical to Figure 22 of the second embodiment. The difference between the present embodiment and embodiment 2 is that according to the present embodiment the information system of the management company 1 (management system) is equipped with a skills etc. management unit 1i for managing the skills required to perform a task, and that the personal information management unit 1g registers the information (personal information) on the employees of corporation 2 and the affiliated company staffs of corporation 3.

According to the present embodiment, the basic procedure related to requesting and providing the qualification related information is almost equal to those explained in (a) to (h) of the second embodiment. The steps that are different from embodiment 2 are (g) and (h). These steps are explained in the following.
(g) The AP management unit 1b of the management system inputs the request condition input by the user using terminals 2a-2c through the network 9, and extracts the necessary statute information and operation conditions etc. respectively from the statute information management unit 1d and operation condition management unit 1e. Further, the AP management unit 1b utilizes the AP to extract the qualification related information corresponding to the request condition based on the extracted statute information and operation conditions etc. from the operation condition management unit 1e, the personal information management unit 1g, the facilities information management unit 1h, and skills etc. management unit 1i.
(h) The AP management unit 1b transmits the extracted qualification related information through the network 9 to the terminal 2a-2c from which the user requested the service. Thus, the user can visually confirm the qualification related information corresponding to the request condition on the screen of the terminal 2a-2c.

Since according to the present embodiment, corporation 2 and corporation 3 share the personal information management unit 1g, the range of retrieval (search) of the qualification related information differs from the other embodiments. The range of retrieval of the common user (the employees of corporation 2, the affiliated company staffs of corporation 3) is limited to only the information on himself/herself. The range of retrieval of the manager system user of corporation 2 is the information on himself/herself and the information on all the staffs that he/she manages including the employees of corporation 2 and the affiliated company staffs from corporation 3. In this case, the manager system user of corporation 2 can search and view in the organizational framework of corporation 2. The range of retrieval of the administrator includes the information on all the employees of corporation 2 and all the affiliated company staffs from corporation 3.

If the employee having the management position authority in corporation 3 is dispatched to corporation 2, the staff is treated as having a common user authority in corporation 2. However, if according to special reasons the staff is provided with management position authority in corporation 2, the person is treated similarly as others having management position authority in corporation 2.

The retrieval range of the common authorization user of corporation 3 is limited to only the information on himself/herself. The retrieval range of the manager system user of corporation 3 is the information on himself/herself and those of his staffs in corporation 3 regardless of whether or not the staff is dispatched to corporation 2. The retrieval range of the administrator of corporation 3 is the information on all the employees of corporation 3 regardless of whether or not the staff is dispatched to corporation 2. In this case, the manager system user and the administrator of corporation 3 can search and view under the organizational framework of corporation 3.

According to the present embodiment, the administrators and manager system users of corporation 2 and corporation 3 are enabled to easily and promptly change their facilities manager, and to acquire and maintain human resources required to run the business or to manage facilities within their company in a planned manner. As a result, the present invention realizes acquisition and effective maintenance of the ISO 9000 series certification related to quality management system which is becoming indispensable in the operation management of the corporation.

According to the present invention, the facilities managers in a corporation can be changed easily and promptly, and facilities managers and necessary staffs required in managing the operation of the corporation can be acquired and maintained in a planned manner.

## Claims

1. A qualification information management method, comprising the steps of:
receiving through a network (9) from a user registered in advance a retrieval condition of qualification relevant information related to facilities management of a corporation to which the user belongs;
obtaining qualification relevant information corresponding to the retrieval condition from at least one of statute information and qualification information related to the facilities management of the corporation, qualification information about a staff of the corporation, and information about a facilities manager of the corporation; and
displaying the qualification relevant information corresponding to the retrieval condition on a terminal screen of the user.

2. The qualification information management method according to claim 1, wherein said qualification relevant information displayed on the terminal screen of the user is selectively displayed depending on rights assigned in advance to the user.

3. A qualification information management method, comprising the steps of:
receiving through a network (9) from a user registered in advance a retrieval condition of qualification relevant information related to facilities management of a corporation to which the user belongs;
extracting qualification relevant information corresponding to the retrieval condition from at least one of statute information and qualification information related to the facilities management of the corporation, qualification information about a staff of the corporation, and information about a facilities manager of the corporation; and
displaying at least information related to a new probable facilities manager on the terminal screen of the user.

4. A qualification information management method, comprising the steps of:
receiving through a network (9) from a user registered in advance a retrieval condition of qualification relevant information related to facilities management of a corporation to which the user belongs;
extracting qualification relevant information corresponding to the retrieval condition from at least one of statute information and qualification information concerning to the facilities management of the corporation, qualification information about a staff of the corporation, and information about a facilities manager of the corporation; and
displaying information relating to at least one of an age distribution of qualified staffs in the corporation and a predicted change over time in number of qualified staffs on the terminal screen of the user.

5. The qualification information management method according to claim 3 or 4, wherein
said user is a staff of the corporation assigned a management right in advance.

6. The qualification information management method according to any of claims 1, 3 and 4, wherein
said information relating to the facilities manager of the corporation is stored as associated with the facilities information about the corporation and the qualification information about a staff of the corporation.

7. The qualification information management method according to any of claims 1, 3 and 4, wherein
said qualification information about a staff of the corporation and said information related to the facilities manager of the corporation are stored in a system of the corporation.

8. The qualification information management method according to any of claims 1, 3 and 4, wherein
said information displayed on the terminal screen of the user is transmitted as encrypted data to a terminal of the user through the network (9).

9. The qualification information management method according to any of claims 1, 3 and 4, wherein
said statute information is updated to latest information after a statute is reformed or at predetermined time intervals.

10. The qualification information management method according to any of claims 1, 3 and 4, wherein
said statute information is updated to latest information after a statute is reformed or at predetermined time intervals; and
a fee is paid to a company to which update of the statute information is committed depending on achievements of the update.

11. The qualification information management method according to any of claims 1, 3 and 4, wherein
a service fee is received from the corporation depending on achievements of a service of displaying on the terminal screen of the user at least the qualification relevant information according to the management contract made with the corporation.

12. The qualification information management method according to any of claims 1, 3 and 4, wherein
if confidential information about the corporation is leaked out, a compensation is paid to the corporation according to the management contract made with the corporation.

13. A qualification information management method, comprising the steps of:
receiving through a network (9) a retrieval condition of qualification relevant information related to facilities management of the corporation from a user of a corporation which has made a management contract;
extracting qualification relevant information corresponding to the retrieval condition from at least one of statute information and qualification information related to the facilities management of the corporation, qualification information about a staff of the corporation, and information about a facilities manager of the corporation; and
displaying on a terminal screen of the user the qualification relevant information corresponding to the retrieval condition.

14. A qualification information management apparatus, connected through a network (9) to a system of a corporation which has made a management contract, for managing qualification relevant information related to facilities management of the corporation, comprising:
a statute information management unit for managing statute information related to the facilities management of the corporation;
an access right management unit (1f) for inputting user information input from a user terminal of the corporation through the network (9), and managing an access right of a user corresponding to the user information; and
an application program management unit (1b) for transmitting to the system of the corporation a program for inputting a retrieval condition of the qualification relevant information input from the user terminal through the network (9), extracting statute information corresponding to the retrieval condition from said statute information management unit, extracting qualification relevant information corresponding to the extracted statute information from the system of the corporation, and displaying the extracted information on the user terminal.

15. A qualification information management apparatus, connected to a system of a corporation which has made a management contract through the network (9), for managing qualification relevant information related to facilities management of the corporation, comprising:
a statute information management unit (1d) for managing statute information related to the facilities management of the corporation;
a facilities information management unit (2e) for managing facilities information about the corporation;
a personal information management unit (2d) for managing qualification information about a staff of the corporation;
an access right management unit for inputting user information input from a user terminal of the corporation through the network (9), and managing an access right of a user corresponding to the user information; and
an application program management unit (1b) for inputting through a network (9) a retrieval condition of the qualification relevant information input from the user terminal, extracting the qualification relevant information corresponding to the retrieval condition from said facilities information management unit (2e) and said personal information management unit (2d), and transmitting the extracted qualification relevant information to the user terminal through the network (9).

16. The qualification information management apparatus according to claim 14 or 15, wherein
said qualification relevant information displayed on or transmitted to the user terminal is at least one of information related to a new probable facilities manager,information related to an age distribution of qualified staffs in the corporation, and information related to a predicted change over time in number of qualified staffs in the corporation.

17. A qualification information management method, comprising the steps of:
receiving from a user registered in advance a retrieval condition of qualification relevant information concerning to operation management of a corporation to which the user belongs;
obtaining qualification relevant information corresponding to the retrieval condition from at least one of statute information and qualification information related to the operation management of the corporation, and qualification information about a staff of the corporation; and
displaying the qualification relevant information corresponding to the retrieval condition on a terminal screen of the user.

18. A qualification information management method, comprising the steps of:
receiving through a network (9) from a user registered in advance a retrieval condition of qualification relevant information related to operation management of a corporation to which the user belongs;
extracting qualification relevant information corresponding to the retrieval condition from at least one of statute information and qualification information related to the operation management of the corporation, and qualification information about a staff of the corporation; and
displaying information related to at least one of an age distribution of qualified staffs in the corporation and a predicted change over time in number of qualified staffs on the terminal screen of the user.

19. A qualification information management apparatus, connected to a system of a corporation which has made a management contract through a network (9), for managing qualification relevant information related to operation management of the corporation,comprising:
a statute information management unit(1d) for managing statute information related to the operation management of the corporation;
an access right management unit (1f) for inputting user information input from a user terminal of the corporation through the network, and managing an access right of a user corresponding to the user information; and
an application program management unit (1b) for transmitting to the system of the corporation a program for inputting a retrieval condition of the qualification relevant information input from the user terminal through the network, extracting statute information corresponding to the retrieval condition from said statute information management unit (1d), extracting qualification relevant information corresponding to the extracted statute information from the system of the corporation,and displaying the extracted information on the user terminal.

20. A qualification information management apparatus, connected to a system of a corporation which has made a management contract through a network, for managing qualification relevant information related to operation management of the corporation, comprising:
a statute information management unit (1d) for managing statute information related to the operation management of the corporation;
a personal information management unit (2d) for managing qualification information about a staff of the corporation;
an access right management unit (1f) for inputting user information input from a user terminal of the corporation through the network, and managing an access right of a user corresponding to the user information; and
an application program management unit (1b) for inputting through a network a retrieval condition of the qualification relevant information input from the user terminal, extracting the qualification relevant information corresponding to the retrieval condition from said personal information management unit (2d), and transmitting the extracted qualification relevant information to the user terminal through the network (9).

21. The qualification information management apparatus according to claim 19 or 20, wherein
said qualification relevant information displayed on or transmitted to the user terminal is at least one of information related to an age distribution of qualified staffs in the corporation and information related to a predicted change over time in number of qualified staffs in the corporation.
